(19) Europäisches Patentamt
European Patent Office
Office européen des brevets

(11) **EP 2 028 951 B1**

(12) **EUROPEAN PATENT SPECIFICATION**

(45) Date of publication and mention
of the grant of the patent:
**27.04.2011  Bulletin 2011/17**

(51) Int Cl.:
***A23G 4/12*** *(2006.01)*

(21) Application number: **06742469.7**

(22) Date of filing: **16.06.2006**

(86) International application number:
**PCT/DK2006/000349**

(87) International publication number:
**WO 2007/143989 (21.12.2007 Gazette 2007/51)**

(54) **CHEWING GUM COMPRISING A HYDROPHOBIC ENZYME FORMULATION**

KAUGUMMI ENTHALTEND EINE HYDROPHOBE ENZYMFORMULIERUNG

CHEWING-GUM COMPRENANT UNE FORMULATION D'ENZYME HYDROPHOBE

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**04.03.2009  Bulletin 2009/10**

(73) Proprietor: **Gumlink A/S
7100 Vejle (DK)**

(72) Inventors:
• **NEERGAARD,  Jesper
DK-8362 Hørning (DK)**

• **WITTORFF, Helle
DK-7120 Vejle Øst (DK)**

(74) Representative: **Olesen, Kaj et al
Patentgruppen
Arosgaarden
Aaboulevarden 31
8000 Aarhus C (DK)**

(56) References cited:
**EP-A1- 0 238 216       WO-A-01/52662
WO-A-84/03201        WO-A-2004/028267
WO-A-2005/063037   US-A- 4 310 554
US-A1- 5 846 927     US-A1- 2004 121 002
US-B1- 6 190 591**

**Description**

**Field of the invention**

The invention relates to a chewing gum according to claim 1.

**Background**

It is generally recognized that chewing gum that is dropped in indoor or outdoor environments gives rise to considerable nuisances and inconveniences due to the fact that the dropped gum sticks firmly to e.g. street and pavement surfaces and to shoes and clothes of people being present or moving in the environments. Adding substantially to such nuisances and inconveniences is the fact that currently available chewing gum products are based on the use of elastomeric and resinous polymers of natural or synthetic origin that are substantially non-degradable in the environment.
City authorities and others being responsible for cleanliness of indoor and outdoor environments therefore have to exercise considerable efforts to remove dropped chewing gum, such efforts, however, being both costly and without satisfactory results.
Attempts have been made to reduce the nuisances associated with the widespread use of chewing gum, e.g. by improving cleaning methods to make them more effective with regard to removal of dropped chewing gum remnants or by incorporating antisticking agents into chewing gum formulations. However, none of these precautions have contributed significantly to solving the pollution problem.
The past two decades have seen an increasing amount of interest paid to synthetic polyesters for a variety of applications ranging from biomedical devices to gum bases. Many of these polymers are readily hydrolyzed to their monomeric hydroxy-acids, which are easily removed by metabolic pathways. Biodegradable polymers are e.g. anticipated as alternatives to traditional non- or low-degradable plastics such as poly(styrene), poly(isobutylene), and poly(methylmethacrylate).
Thus, it has recently been disclosed, e.g. in US 5,672,367, that chewing gum may be made from certain synthetic polymers having in their polymer chains chemically unstable bonds that can be broken under the influence of light or hydrolytically into water-soluble and non-toxic components. The claimed chewing gum comprises at least one degradable polyester polymer obtained by the polymerization of cyclic esters, e.g. based on lactides, glycolides, trimethylene carbonate and ε-caprolactone. It is mentioned in this patent application that chewing gum made from such polymers that are referred to as biodegradable are degradable in the environment.
A problem related to the prior art is, however, that even biodegradable chewing gum may under certain circumstances inherit unsatisfying degradability rates.
A chewing gum comprising enzyme in order to increase degradability rates for the chewing gum is known e.g. from WO 2005/063037. A problem related to this is that a rather high percentage of the employed enzyme is lost during the chewing process as it migrates into the saliva and further on to the stomach of the consumer.
US 4,310,554 discloses preparation of cheese with microencapsulated enzymes, US 6,190,591 discloses a method for continuously encapsulating or embedding a component in a matrix, and US 2004/121002 discloses an encapsulated bioactive substance composite.

**Summary of the invention**

The invention relates to a chewing gum comprising at least one biodegradable polymer, sweetener in an amount from 0.5% to 95% of said chewing gum, one or more flavoring agents, fillers in an amount from 0 to 50% by weight of said chewing gum, further chewing gum ingredients and at least one enzyme, wherein said at least one enzyme is comprised in a hydrophobic enzyme formulation,
wherein said hydrophobic enzyme formulation comprises at least one enzyme

- at least partly encapsulated by a hydrophobic encapsulation, or
- dispersed in an anhydrous dispersion medium, wherein said anhydrous medium comprises oil or other suitable lipophilic solvents,

wherein said at least one enzyme is release controlled by a hydrophobic enzyme formulation.
According to the invention, it has been established that an enzymatically activated degradation may by obtained when applying a hydrophobic enzyme formulation even though the hydrophobic enzyme formulation, e.g. when applying a dispersion of substantially hydrophilic enzymes in a hydrophobic medium such as oil, might be suspected to have a negative influence on the functionality of the enzymes at the active sites of the applied enzyme.
This effect has also surprisingly been obtained even during degradation tests where the desired degradation was obtained through hydrolysis.

According to the invention, several different examples of hydrophobic enzyme formulations have been provided.

A further advantageous feature of the invention is that the predegradation may be minimized due to the fact that the enzyme(s) in the chewing gum may be relatively well-isolated from moisture prior to chewing.

According to en embodiment of the invention, the dispersion media may preferably comprise a hydrophobic dispersion medium. It should however be noted that hydrophobic formulation also may be obtained e.g. by means of an initial step of dissolving the enzyme(s) in a hydrophilic medium, e.g. water, and then, subsequently dispersing this pre-solution into a hydrophobic medium, Evidently, several other applicable methods and formulations may be applied for the purpose of obtaining a hydrophobically invoked binding of enzyme(s) to at least one of the gum base polymers.

In an embodiment of the invention said hydrophobic enzyme formulation comprises at least one enzyme adsorbed to a hydrophobic carrier.

In an embodiment of the invention said hydrophobic enzyme formulation comprises at least one hydrophilic enzyme.

In an embodiment of the invention said hydrophobic enzyme formulation comprises at least one modified enzyme, wherein modified means chemically modified, genetically modified, phosphorylated, a zymogen, or a proenzyme.

The at least one modified enzyme may be modified in many different ways. Examples, which are meant to be exemplifying and not limiting are: chemically modified, genetically modified, phosphorylated, a zymogen, a proenzyme (a non-activated enzyme which upon cleavage of a certain C-teminal or N-terminal peptide sequence will be activated), etc.

The use of hydrophilic enzymes in prior art has proven to result in a relative large migration of enzyme from the chewing gum into the saliva during chewing due to the hydrophilicity of the enzyme.

One aspect of the invention is that the use of a hydrophobic enzyme formulation in the chewing gum enzymes may result in a reduced release of enzymes from a chewing gum during chewing and at the same time obtain a reasonable degradation of the chewing gum during and of course subsequent to the chewing process even in spite of the fact that a hydrophobic formulation could have denatured or at least reduced the effect of the enzyme for several different reasons.

It has thus been established that the chewing of a chewing gum, comprising enzymatically catalyzable gum base polymers and furthermore comprising the hydrophobic formulated enzymes according to the provisions of the invention, may result in the an improved degradation, even with respect to enzymes, e.g. Trypsin, already known to be suitable for triggering of degradation in a biodegradable chewing gum.

This feature may among other facts relate to the fact that enzymes of the chewing gum are attached or bonded to the gum base by using hydrophobic enzymes or increasing the resulting hydrophobicity of the enzymes relevant. Hence even when applying a relative high initial amount of enzyme within the chewing gum it may be necessary to ensure a sufficient remaining concentration of enzyme after chewing in order to degrade the chewing gum. This initial amount of enzyme may be avoided or at least reduced by the use of at least one enzyme being release controlled by being incorporated in a hydrophobic formulation according to the invention.

Biodegradable polymers in prior art are typically more hydrophilic than conventional polymers, yet still hydrophobic. Hence by applying a hydrophobic enzyme it is achieved that the enzyme is more strongly connected to the gum base than for equivalent hydrophilic enzymes.

Hydrophobic enzyme formulation designates that the applied enzyme is formulated hydrophobically in the sense that the enzyme is associated to hydrophobic parts mechanically of chemically.

When obtaining even a minor increased hydrophobicity by means of release-controlling a hydrophilic enzyme by a hydrophobic enzyme formulation, an advantageous feature by the present invention is obtained.

According to the invention an object is to employ a hydrophobic enzyme formulation and in some cases even obtain a resulting improved degradation of the at least one biodegradable gum base polymer.

In an embodiment of the invention said release control is provided by encapsulating said enzyme within a hydrophobic material.

Methods of encapsulating substances, e.g. enzyme, within hydrophobic materials are well described in the prior art, as the present problem has been known for a long time. However the use of these methods in a chewing gum has never been seen. As examples we will mention EP 0 238 216 and US 5,846,927, hereby incorporated by reference, wherein the encapsulating is employed in another context, but nevertheless they are applicable in chewing gums as well, when applying non-toxic hydrophobic materials.

In an embodiment of the invention said release control is provided by encapsulating said enzyme within a hydrophobic polymer.

In an embodiment of the invention said release control is provided by encapsulating said enzyme within a wax.

In an embodiment of the invention said release control is provided by encapsulating said enzyme within a fat.

In an embodiment of the invention said release control is provided by keeping said enzyme within a hydrophobic dispersion.

In an embodiment of the invention said hydrophobic dispersion is an oil dispersion.

By keeping said enzyme as a dispersion within a hydrophobic solution, which typically would be an oil dispersion, a hydrophobic enzyme formulation is obtained. This method for obtaining a hydrophobic enzyme formulation is advantageous due to the very straightforward procedure of mixing of enzyme with the oil dispersion.

US 4,849,357, hereafter incorporated by reference, describes one method for modifying a hydrophilic enzyme to impart hydrophobic characteristics. In this method the enzyme is mixed with one or more water-insoluble fatty acid metal salts in the presence of an organic solvent whereby, upon removal of the organic solvent, the fatty acid acts as a hydrophobic carrier for the enzyme.

In an embodiment of the invention said release control is provided by adding to said enzyme a part making it hydrophobic.

Another method known to the person skilled in the art is to bond polyethylene glycol on the surface of the enzyme with a covalent bond.

Further methods of making at least a part of said enzyme hydrophobic are present and the methods described herein are meant as non-limitative examples of suitable methods.

In an embodiment of the invention said hydrophobic enzyme formulation is obtained by employing a predominantly hydrophobic enzyme.

According to the invention a hydrophobic enzyme formulation may advantageously be found by employing an enzyme which by itself has the desired characterics, e.g. the employed enzyme is a hydrophobic enzyme.

In an embodiment of the invention said at least one enzyme is activated when, during chewing, contact is made between said enzyme, said at least one biodegradable polymer and water.

According to an embodiment of the invention said enzyme is, by means of any of the above methods, kept adequately separated from said at least one biodegradable polymer prior to chewing to keep degradation of said chewing gum in hold until chewing.

In an embodiment of the invention said at least one enzyme is activated when, during chewing, contact is made between said enzyme, said at least one biodegradable polymer, water and at least one second enzyme present in the oral cavity.

In an embodiment of the invention the water content of said chewing gum is below 5 % by weight of said chewing gum.

Prior to chewing of the chewing gum it is important to keep the water content low in any of the separate ingredients in the chewing gum to prevent the chewing gum from degrading e.g. a hydrolytically degradation catalyzed by hydrolase enzymes.

In an embodiment of the invention the water content of said chewing gum is below 2 % by weight of said chewing gum.

According to the invention preferably the water content as a whole of all ingredients present should be low in order to minimize the risk of water establishing contact to a hydrophilic enzyme within said hydrophobic enzyme formulation prior to chewing.

In an embodiment of the invention said at least one biodegradable polymer comprises synthetic biodegradable polymers and/or natural biodegradable polymers. In an embodiment of the invention said at least one biodegradable polymer comprises a polyester.

In an embodiment of the invention at least one of said synthetic biodegradable polymers is selected from the group consisting of cellulose derivatives such as cellulose ether, cellulose ester or cellulose co-esters, aliphatic polyesters such as poly lactic acid, polyhydroxybutyric acid, hydrophobic proteins such as zein and any combination thereof.

In an embodiment of the invention at least one of said biodegradable polymers is selected from the group consisting of polypeptides such as collagen and gelatin; polyamino acids such as poly-L-glutamic acid and poly-L-lysine; polysaccharides such as alginic acid, chitin or any combination thereof.

In an embodiment of the invention said at least one enzyme is immobilized by an enzyme carrier.

According to the invention an enzyme carrier may aid to immobilize said at least one enzyme, whereby an even lesser amount of enzyme is lost during chewing.

In an embodiment of the invention the amount of said enzyme carrier in the chewing gum subsequent to chewing in about five minutes is above 10 % of the initial amount of said enzyme carrier.

In an embodiment of the invention the amount of said at least one enzyme in the chewing gum subsequent to chewing in about five minutes is above 10 % of the initial amount of said at least one enzyme.

In an embodiment of the invention the chewing of said chewing gum facilitates said at least one enzyme to initiate the degradation of said at least one biodegradable polymer

In an embodiment of the invention said at least one enzyme has a temperature optimum in an interval between 0°C and 80°C, preferably between 15°C and 55°C.

In an embodiment of the invention said at least one enzyme has a temperature optimum in an interval between 30°C and 37°C, preferably 32°C and 35°C.

In an embodiment of the invention the temperature range between 32°C and 35°C is within the range of optimal activity of the enzyme.

According to an embodiment of the invention the employed enzyme has optimal activity around the typical temperatures of human saliva, i.e. 32°C to 35°C, whereby a beginning degradation of the chewing gum has the best possible conditions during the time when chewing the chewing gum.

In an embodiment of the invention at least two enzymes having different temperature optimums are applied at the same time.

According to an embodiment of the invention a number of enzymes with different temperature optimums may be applied, e.g. one enzyme having an optimum at the typical temperature of human saliva and another enzyme having an optimum at e.g. an average outdoor temperature for the location for selling.

In an embodiment of the invention said at least one enzyme is selected from the group consisting of oxidoreductases, transferases, hydrolases, lyases, isomerases and ligases.

In an embodiment of the invention said chewing gum comprises a buffering system.

According to an embodiment of the invention a buffering system may provide a predefined pH-value in the chewing gum in order to obtain and maintain the desired conditions.

In an embodiment of the invention said buffering system provides a pH-value above 5.5.

Preferably it should be ensured that the pH-value within the mouth of the consumer during chewing is kept above 5.5 due to risk of damaging the teeth.

In an embodiment of the invention said chewing gum is centerfilled.

In an embodiment of the invention said chewing gum is formed by compression.

In an embodiment of the invention said fillers comprise hydrophilic fillers.

Typically gum bases are inherently hydrophobic and it may be difficult to contact gum base-incorporated enzyme with water. This problem may be solved by means of enhancing the hydration of the gum base when the chewing gum is chewed. Such means could e.g. be incorporation of hydrophilic or hygroscopic fillers, emulsifiers, or sweeteners etc. which promote the absorption of water into the gum base.

In an embodiment of the invention said hydrophilic fillers are selected from the group consisting of ground limestone, calcium carbonate, magnesium silicate, starch, aluminum silicate, talc, mono-, di- and tri-calcium phosphate, cellulose polymers and combinations thereof.

In an embodiment of the invention said chewing gum comprises filler in an amount of about 1 to about 50% by weight of the chewing gum, more typically about 10 to about 40% by weight of the chewing gum.

In an embodiment of the invention said chewing gum comprises active ingredients.

Some suitable active ingredients are disclosed in the detailed description.

In an embodiment of the invention said sweetener comprises bulk sweeteners.

Suitable bulk sweeteners include both sugar and non-sugar sweetening components. Bulk sweeteners typically constitute from about 5 to about 95% by weight of the chewing gum, more typically about 20 to about 80% by weight such as 30 to 60% by weight of the chewing gum.

In an embodiment of the invention said sweetener comprises high-intensity sweeteners.

Suitable high intensity sweeteners include those mentioned in the detailed description. In different embodiments according to the present invention, the chewing gum typically comprises high intensity sweeteners in an amount of about 0 to about 1.2 %, preferably about 0.1 to about 0.6 % by weight of the chewing gum.

In an embodiment of the invention said chewing gum comprises flavor.

In an embodiment of the invention said chewing gum comprises at least one coloring agent.

In an embodiment of the invention said chewing gum comprises a coating.

In an embodiment of the invention said chewing gum comprises softeners.

Advantageously the softeners present are hydrophilic and hence capable of absorbing moisture from the chewing gum.

Softeners may according to the invention be added both in the chewing gum and the gum base.

In an embodiment of the invention said softeners are selected from the group consisting of glycerol monostearate, glycerol triacetate, lecithin, mono-, and diglycerides, short and medium chain triglycerides, acetylated monoglycerides, and combinations thereof.

In an embodiment of the invention at least one of said at least one biodegradable polymer comprises at least one biodegradable elastomer.

In an embodiment of the invention at least one of said at least one biodegradable polymer comprises at least one biodegradable elastomer plasticizer.

In an embodiment of the invention at least one of said at least one biodegradable polymer comprises at least one synthetic polymer.

In an embodiment of the invention at least one of said at least one biodegradable polymer comprises at least one polyester polymer obtained by polymerization of at least one cyclic ester.

In an embodiment of the invention at least one of said at least one biodegradable polymer comprises at least one polyester polymer obtained by polymerization of at least one alcohol or derivative thereof and at least one acid or derivative thereof.

In an embodiment of the invention at least one of said at least one biodegradable polymer comprises at least one polyester obtained by polymerization of at least one compound selected from the group of cyclic esters, alcohols or derivatives thereof and carboxylic acids or derivatives thereof.

In an embodiment of the invention said at least one biodegradable polyester is produced by condensation.

In an embodiment of the invention said at least one biodegradable polyester is produced by ring-opening.

In an embodiment of the invention said hydrophobic enzyme formulation is at least partly comprised in the chewing gum.

In an embodiment of the invention said hydrophobic enzyme formulation is at least partly comprised in a coating provided to the chewing gum.

Moreover the invention relates to a method of release controlling at least one enzyme in a chewing gum comprising at least one biodegradable polymer, whereby the control of release during chewing is obtained through adding of hydrophobic enzyme formulation to the chewing gum.

Moreover the invention relates to the use of a hydrophobic enzyme formulation for the purpose of delaying or minimizing release of enzyme from a chewing gum during chewing

**The drawings**

The invention will now be described with reference to the drawings of which

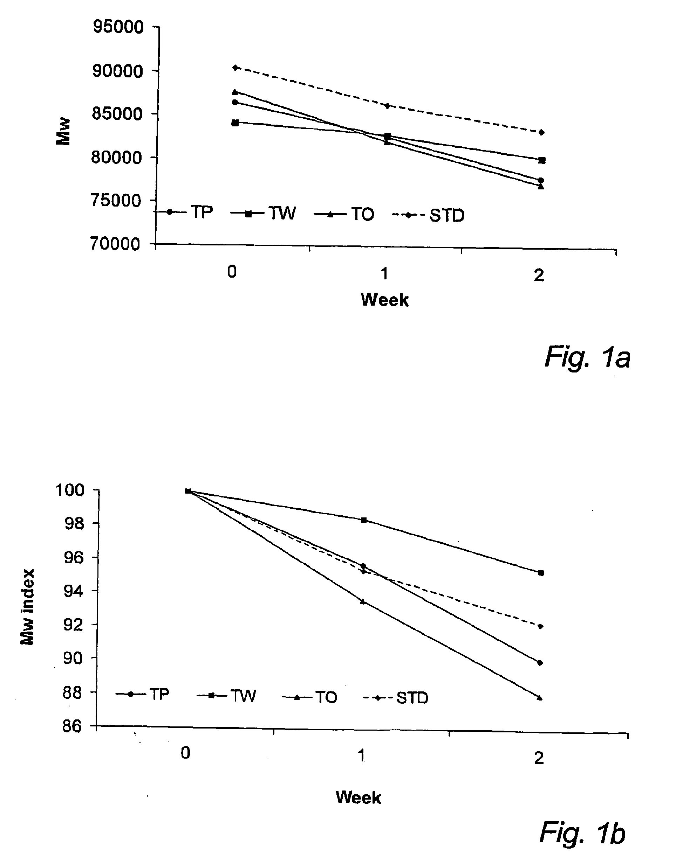

fig. 1a and fig. 1b    illustrate the degradation process when applying a hydrophobic enzyme formulation according to an embodiment of the invention.

**Detailed description**

In the prior art enzymes have been incorporated in chewing gum for the purpose of obtaining an accelerated degradation of biodegradable gum base polymers. This technique has proved to be very promising. A problem related to the prior art enzymes is however that the enzymes tend to be released from the chewing gum faster than desired. Such too fast release of enzymes results in at least two drawbacks relevant for the cost efficiency and application of the final chewing gum, namely that substantial amount of enzymes ends in the mouth of the user, thereby reducing the number of applicable enzymes with respect to legalization and moreover that a release of such as a substantial amount of the chewing gum incorporated enzymes results in that the enzymes, consequently, looses influence on the degradation process, as a substantial part of the degradation process takes effect after such release.

According to the invention it has been established that prior art enzymes are substantially hydrophilic and that this hydrophilicity results in that the enzymes releases from the chewing gum too fast during chewing.

It has however been established that such release may be reduced by applying a hydrophobic formulation of the enzyme(s) to be used in the chewing gum and the present invention relates to chewing gum comprising biodegradable polymers, chewing gum ingredients and a release-controlling hydrophobic enzyme formulation. By these means a chewing gum may be provided, wherein the polymers constitute substrates for the hydrophobic enzyme formulation and consequently are at least partly degraded.

As explained in the application, different methods may be applied for obtaining release-control of enzymes by using a hydrophobic enzyme formulation. These methods may both involve a modification of enzymes or enzyme products used in the chewing gum or, evidently, choosing enzymes which are hydrophobic or at least more hydrophobic than the usually applied enzymes.

Hence, as disclosed below, an enzyme formulation may relate both to the chemical nature of the enzymes per se or relate to a more physical nature of enzyme e.g. when mixed with carriers, encapsulation, etc. Hence when it is stated that a hydrophobic enzyme formulation is capable of degrading or facilitating degradation of the degradable polymers it is the enzyme, which is naturally a part of the hydrophobic enzyme formulation, which is capable of degrading the degradable polymers.

As explained below, it is well-known that enzymes may enhance degradation of gum base polymers.

It is typically noted that the polymers of interest with respect to degration relates to the typical gum base polymers, such as resins or elastomers. Such polymers may both be synthetic or natural although synthetic polymers may be preferred in certain contexts.

According to the invention it has been noted that the release of enzyme may be reduced by a hydrophobic formulation of the enzyme, e.g. by means of a simple encapsulation in fat, and it has moreover been surprisingly noted that the use of a hydrophobic formulation of the enzyme does not necessarily result in a reduced effective degradation even in a context where the desired degradation is established at least partly by hydrolysis and where the applied enzyme (s) is/are applied for the purpose of improving such hydrolysis.

This particular effect will be explained and illustrated by the below examples.

Initially, a short explanation will be given with respect to the intended effect of enzymes in chewing gum.

Evidently, enzymes used for enhancement of degradation relates to chewing gum where the gum base polymers, i.e. elastomer and resins are biodegradable, and where the enzymes result in increased polymer degradation with respect to rate and extent of degradation as compared to non-enzymatic degradation.

It is realized that use of enzymes for the purpose of chewing gum polymer degradation may advantageously facilitate the possibility to include polymers that under normal circumstances are regarded as having a limited biodegradability and therefore to some extent are avoided in biodegradable chewing gum compositions. The favorable influence on the desired texture that these polymers may have may due to the use of enzymes be obtained without compromising the chewing gum degradability.

In an embodiment of the invention, degradation of a biodegradable polymer is improved and/or accelerated when applied under environmental conditions under which biodegradation would not occur untriggered.

If chewing gum is disposed in dirt in outdoor environments, there are a lot of chemical, physical and biological factors, whereby degradation of biodegradable polymers is facilitated. But falling on for example pavements or indoors the chewing gum may not meet the required circumstances for degradation. In that case even biodegradable chewing gum may be of inconvenience. A solution according to the present invention facilitates acceleration of the degradation in environments, where the conditions are only slightly degrading. The presence of enzymes makes the degradation process progress faster than if the only influences are physical- and/or chemical factors in the surroundings.

According to a preferred definition of biodegradability according to the invention, biodegradability is a property of certain organic molecules whereby, when exposed to the natural environment or placed within a living organism, they react through an enzymatic or microbial process, often in combination with a chemical process such as hydrolysis, to form simpler compounds, and ultimately carbon dioxide, nitrogen oxides, methane, water and the like.

In the present context the term 'biodegradable polymers' means environmentally or biologically degradable polymer compounds and refers to chewing gum base components which, after dumping the chewing gum, are capable of undergoing a physical, chemical and/or biological degradation whereby the dumped chewing gum waste becomes more readily removable from the site of dumping or is eventually disintegrated to lumps or particles, which are no longer recognizable as being chewing gum remnants. The degradation or disintegration of such degradable polymers may be effected or induced by physical factors such as temperature, light, moisture, etc., by chemical factors such as oxidative conditions, pH, hydrolysis, etc. or by biological factors such as microorganisms and/or enzymes. The degradation products may be larger oligomers, trimers, dimers and monomers.

Preferably, the ultimate degradation products are small inorganic compounds such as carbon dioxide, nitrogen oxides, methane, ammonia, water, etc.

In some useful embodiments all of the polymer components of the gum base are environmentally or biologically degradable polymers. It is typically noted that the polymers of interest with respect to degration relates to the typical gum base polymers, such as resins or elastomers. Such polymers may both be synthetic or natural.

Two further aspects of the invention will now shortly be summarized. A first aspect according to an embodiment of the invention is to address the possibility of increasing the degradability of a biodegradable chewing gum applied in a chewing gum having a polymer matrix solely or partly comprising biodegradable polymers. A second quite different aspect is rather to facilitate use of conventional polymers or biodegradable polymers, which without any catalyzing enzyme is less suitable for the application with respect to, for example, degradation rate.

In short, those and further aspects are obtained by applying hydrophobically formulated enzymes in chewing gum as degradation triggers and catalysts. In others words, according to the invention, at least one biodegradable polymer of a chewing gum forms a substrate paired with a suitable hydrophobically formulated enzyme. Several different criteria must be considered when determining which enzymes should be paired with which polymers, by which processes, what type of hydrophobic formulation results in the desired chewing gum, the intended degradation, etc.

In the present context the term 'enzyme' is used in the same sense as it is used within the arts of biochemistry and molecular biology. Enzymes are biological catalysts, typically proteins, but non-proteins with enzymatic properties have been discovered. Enzymes originate from living organisms where they act as catalysts and thereby regulate the rate at which chemical reactions proceed without themselves being altered in the process. The biological processes that occur within all living organisms are chemical processes, and enzymes regulate most of them. Without enzymes, many of these reactions would not take place at a perceptible rate. Enzymes catalyze all aspects of cell metabolism. This includes the conservation and transformation of chemical energy, the construction of cellular macromolecules from smaller precursors and the digestion of food, in which large nutrient molecules such as proteins, carbohydrates, and fats are broken down into smaller molecules.

Generally enzymes have valuable industrial and medical applications. The fermenting of wine, leavening of bread, curdling of cheese, and brewing of beer have been practiced from earliest times, but not until the 19th century were these reactions understood to be the result of the catalytic activity of enzymes. Since then, enzymes have assumed an increasing importance in industrial processes that involve organic chemical reactions. The investigations and developing of enzymes are still on going and new applications of enzymes are discovered. Synthetic polymers are often regarded as hardly degradable by enzymes and theories explaining this phenomenon have been proposed suggesting that enzymes tend to attack chain ends and that chain ends of man-made polymers tend to be deep in the polymer matrix. However, experiments according to the present invention surprisingly showed that the effect of adding enzymes in chewing gum apparently was that the polymers of the chewing gum experienced more degradation.

Enzymes are proteins which catalyze a wide variety of chemical reactions, many of great commercial importance. Enzymes are generally classified according to the type of reaction which they catalyze, e.g., hydrolases are enzymes that catalyze the addition of the elements of water across the bond that is cleaved, e.g., an ester or peptide linkage. Commercially-important hydrolases include proteases which are employed in laundry detergents, polysaccharidases which control slime in industrial process waters, and lipases which are employed to transesterify fats and oils. Cellulases and ligninolases can be employed in wood fiber production and bleaching.

The majority of enzymes to be used in chewing gums is hydrophilic by nature and hence has a tendency towards migrating into the saliva during chewing. Hence by using a hydrophobic enzyme formulation according to the invention to be able to release-control the amount of enzyme migrating into the saliva an advantageous improvement is obtained. In this context it should be noted that even a slight reduction of release of enzymes from the chewing gum during chewing is advantageous with respect to e.g. cost efficiency with respect to the enzymes per se.

As catalysts enzymes generally may increase the rate of attainment of equilibrium between reactants and products of chemical reactions. According to the present invention these reactants comprise polymers and different degrading molecules such as water, oxygen or other reactive substances, which may come into the vicinity of the polymers, whereas the products comprise oligomers, trimers, dimers, monomers and smaller degradation products. When reactions are enzyme catalyzed, at least one of the reactants forms a substrate for at least one enzyme, which means that a temporary binding emerges between reactants i.e. enzyme substrates and enzymes. In different ways this binding makes the reaction proceed faster, for instance by bringing the reactants into conformations or positions that favor reaction. An increase in reaction rate due to enzymatic influence i.e. catalysis generally occurs because of a lowering of an activation energy barrier for the reaction to take place. However, enzymes do not change the difference in free energy level between initial and final states of the reactants and products, as the presence of a catalyst has no effect on the position of equilibrium. When a catalytic process has been completed, the at least one enzyme releases the product or products and returns to its original state, ready for another substrate.

The temporary binding of one or more molecules of substrate happens in regions of the enzymes called the active sites and may for example comprise hydrogen bonds, ionic interactions, hydrophobic interactions or weak covalent bonds. In the complex tertiary structure of enzymes, an active site may assume the shape of a pocket or cleft, which fit particular substrates or parts of substrates. Some enzymes have a very specific mode of action, whereas others have a wide specificity and may catalyze a series of different substrates. Basically molecular conformation is important to the specificity of enzymes, and they may be rendered active or inactive by varying pH, temperature, solvent, etc. Yet some enzymes require co-enzymes or other co-factors to be present in order to be effective, in some cases forming association complexes in which a co-enzyme acts as a donor or acceptor for a specific group. Some times enzymes may be specified as endo-enzymes or exo-enzymes, thereby referring to their mode of action. According to this terminology exo-enzymes may successively attack chain ends of polymer molecules and thereby for instance liberate terminal residues or single units, whereas endo-enzymes may attack mid-chain and act on interior bonds within the polymer molecules, thereby cleaving larger molecules to smaller molecules. Generally enzymes may be attainable as liquids or powders and eventually be encapsulated in various materials.

Today, several thousand different enzymes have been discovered and more are continuously being discovered, thus the number of known enzymes is still increasing. For this reason the Nomenclature Committee of the International Union of Biochemistry and Molecular Biology (NC-IUBMB) has established a rational naming and numbering system. In the present context enzyme names are used in accordance with the recommendations devised by NC-IUBMB.

Different methods are available for establishing a hydrophobic enzyme formulation in order to release control the enzyme(s) added to the chewing gum.

In the following, four non-limiting methods applicable within the scope of the invention will be mentioned.

*Encapsulation*

One way to obtain the desired result may be where the release control is provided by encapsulating the enzyme within a hydrophobic material, e.g. a hydrophobic polymer. Methods for encapsulating substances, e.g. enzymes, within hydrophobic materials are well described in prior art; however the use of these methods in a chewing gum has never been seen. Some examples can be seen in EP 0 238 216 and US 5,846,927, hereby incorporated by reference, wherein the encapsulating is employed in another context, but nevertheless they are applicable in chewing gums as well, when applying non-toxic hydrophobic materials.

*Oil dispersion*

Another method is where said release control is provided keeping the enzyme within an oil dispersion. Here the enzyme is mixed into a dispersion within a hydrophobic solution, which typically would be an oil dispersion, whereby a hydrophobic enzyme formulation is obtained. This method for obtaining a hydrophobic enzyme formulation is very straightforward, as the mixing may be carried out very fast and without the use of dedicated equipment.

US 4,849,357, hereafter incorporated by reference, describes another method for modifying a hydrophilic enzyme to impart hydrophobic characteristics. In this method the enzyme is mixed with one or more water-insoluble fatty acid metal salts in the presence of an organic solvent whereby, upon removal of the organic solvent, the fatty acid acts as a hydrophobic carrier for the enzyme.

*Amending the enzyme*

Yet another method is where said release control is provided by adding to said enzyme a part making it hydrophobic. A method known to the person skilled in the art is to bond polyethylene glycol on the surface of the enzyme with a covalent bond. Another method with a covalent bond onto the surface of an enzyme is mentioned in US 5,134,072, wherein a polyurethane-modified enzyme is produced by reaction of an enzyme in aqueous solution with an aqueous solution of a water-soluble polyurethane pre-polymer/bisfulite adduct, and wherein the reaction forms a covalent bond between the enzyme and the pre-polymer/bisulfite adduct. In this method the pre-polymer/bisulfite adduct could be substituted to a choice between many other hydrophobic molecules, e.g. a hydrophobic protein.

Yet another method is to use an enzyme resulting as a fusion protein between an enzyme suitable for degrading the gum base polymers and a hydrophobic protein.

In amending the enzyme a large number of active sites is preferred, whereby a higher degree of control of parameters relevant for the process of degradation may become present. This could e.g. be temperature and pH, which by adjusting appropriately may facilitate the degradation of the gum base polymers even better according an embodiment of the invention the invention.

*A hydrophobic enzyme*

A further method is where said hydrophobic enzyme formulation is obtained by employing a predominantly hydrophobic enzyme. By using a predominantly hydrophobic enzyme the object of binding the enzyme to the gum base may be achived.

Evidently, it should be noted that a hydrophobic formulation of an enzyme may of course also be obtained by a hydrophobic modification of the usually applied carrier or immobilizer.

The general principles in manufacturing an embodiment according to the invention will now be described together with a general description of the obtained product.

An enzyme containing biodegradable chewing gum may be prepared by either a conventional two-step batch process, a less used but quite promising one-step process or e.g. a continuous mixing performed e.g. by means of an extruder and the fourth preferred embodiment is to prepare the chewing gum by use of compression techniques.

The two-step process comprises separate manufacturing of gum base and subsequently mixing of gum base with further chewing gum ingredients. Several other methods may be applied as well. Examples of two-step processes are well described in the prior art. An example of a one-step process is disclosed in WO 02/076229 A1, hereby included by reference. Examples of continuous mixing methods are disclosed in US 6 017 565 A, US 5 976 581 A and US 4 968 511 A, hereby included by reference. Examples of processes to produce compressed chewing gum are disclosed in US 4405647, US 4753805, WO 8603967, EP 513978, US 5866179, WO/97/21424, EP 0 890 358, DE 19751330, US 6,322,828, PCT/DK03/00070, PCT/DK03/00465, hereby included by reference.

If a two-step process is applied, care should be taken, e.g. in avoiding too much heating of the applied enzymes. This may e.g. be done by mixing the applied enzyme(s) into the chewing gum in the second step, i.e. in the step where the gum base is mixed with the chewing gum ingredients.

If a one-step process is applied, the same problem should be observed, although the one-step process in some ways appears to be quite suitable for the purpose and in some processes temperature control or cooling may in fact be avoided.

If a continuous mixing method is applied, again, the active cooling and heating should be carefully controlled to avoid the above-described destructions or damaging of the applied enzyme(s).

Turning now to one of several principal embodiments of the invention, a chewing gum will be described in more general terms.

First of all, the chewing gum comprises a polymer composition, which is partly or solely based on biodegradable polymers. These polymers are, as it is the case with conventional non-degradable chewing gum, the components of the chewing gum providing the texture and "masticatory" properties of a chewing gum. Lists of suitable and preferred polymers according to the invention are described below (at the end of the description).

Moreover, the chewing gum comprises further additives applied for obtaining the desired fine-tuning of the above-mentioned chewing gum. Such additives may e.g. comprise softeners, emulsifiers, etc. Lists of such suitable and preferred additives are described below (at the end of the description).

Moreover, the chewing gum comprises further ingredients applied for obtaining the desired taste and properties of the above-mentioned chewing gum. Such ingredients may e.g. comprise sweeteners, flavors, acids, etc. Lists of such suitable and preferred ingredients are described below (at the end of the description).

It should be stressed that the above-mentioned additives and ingredients may interact in function. As an example, flavors may e.g. be applied as or act as softeners in the complete system. A strict distinction between additives and ingredients may typically not be established.

Furthermore, a coating may be applied for complete or partial encapsulation of the obtained chewing gum center. In the present context coating and center are regarded as a whole, thus using the term "chewing gum" includes both the chewing gum body and an optional coating. Examples of different coatings are described below (at the end of the description).

Advantages according to the invention are that a partial disintegration or non-tack improvement of the chewing gum lump may be obtained. A further explanation of the advantages is given in two separate examples. One example is when enzymatic influences result in a partial disintegration and a crumbly structure of the lump thereby releasing the lump forming ingredients from the surface. Another example deals with a situation in which the chewing gum lump changes its structure due to enzymatic influence and where experiments have shown that the chewing gum lump when some conditions are fulfilled releases from surfaces to which the lump is attached. In other words, this non-tack property may be obtained even without any visual disintegration of the lump.

It is a further advantage according to the invention that completely dissolving may be obtained, which means that the polymer residues may enter the cycle in nature. Incorporation of enzymatic influences results in completely biodegradable chewing gum polymers.

In accordance with the general principles in manufacturing an embodiment according to the invention, suitable examples of polymers, enzymes and chewing gum ingredients will be outlined in the following.

Suitable examples of environmentally or biologically degradable chewing gum base polymers, which may be applied in accordance with the gum base of the present invention, include degradable polyesters, poly(ester-carbonates), polycarbonates, polyester amides, polypeptides, homopolymers of amino acids such as polylysine, and proteins including derivatives thereof such as e.g. protein hydrolysates including a zein hydrolysate. Particularly useful compounds of this type include polyester polymers obtained by the polymerization of one or more cyclic esters such as lactide, glycolide, trimethylene carbonate, δ-valerolactone, β-propiolactone and ε-caprolactone, and polyesters obtained by polycondensation of a mixture of open-chain polyacids and polyols, for example, adipic acid and di(ethylene glycol). Hydroxy carboxylic acids such as 6-hydroxycaproic acid may also be used to form polyesters or they may be used in conjunction with mixtures of polyacids and polyols. Such degradable polymers may be homopolymers, copolymers or terpolymers, including graft- and block-polymers.

The particularly useful biodegradable polyester compounds produced from cyclic esters may be obtained by ring-opening polymerization of one or more cyclic esters, which includes glycolides, lactides, lactones and carbonates. The polymerization process may take place in the presence of at least one appropriate catalyst such as metal catalysts, of which stannous octoate is a non-limiting example and the polymerization process may be initiated by initiators such as polyols, polyamines or other molecules with multiple hydroxyl or other reactive groups and mixtures thereof.

Accordingly, the particularly useful biodegradable polyesters produced through reaction of at least one alcohol or derivative thereof and at least one acid or derivative thereof may generally be prepared by step-growth polymerization of di-, tri- or higher-functional alcohols or esters thereof with di-, tri- or higher-functional aliphatic or aromatic carboxylic acids or esters thereof. Likewise, also hydroxy acids or anhydrides and halides of polyfunctional carboxylic acids may be used as monomers. The polymerization may involve direct polyesterification or transesterification and may be catalyzed. Use of branched monomers suppresses the crystallinity of the polyester polymers. Mixing of dissimilar monomer units along the chain also suppresses crystallinity. To control the reaction and the molecular weight of the resulting polymer the polymer chains may be ended by addition of monofunctional alcohols or acids and/or to utilize a stoichiometric imbalance between acid groups and alcohol groups or derivatives of either. Also the adding of long chain aliphatic carboxylic acids or aromatic monocarboxylic acids may be used to control the degree of branching in the polymer and conversely multifunctional monomers are sometimes used to create branching. Moreover, following the polymerization monofunctional compounds may be used to endcap the free hydroxyl and carboxyl groups.

Furthermore, polyfunctional carboxylic acids are in general high-melting solids that have very limited solubility in the polycondensation reaction medium. Often esters or anhydrides of the polyfunctional carboxylic acids are used to overcome this limitation. Polycondensations involving carboxylic acids or anhydrides produce water as the condensate, which requires high temperatures to be driven off. Thus, polycondensations involving transesterification of the ester of a polyfunctional acid are often the preferred process. For example, the dimethyl ester of terephthalic acid may be used instead of terephthalic acid itself. In this case, methanol rather than water is condensed, and the former can be driven off more easily than water. Usually, the reaction is carried out in the bulk (no solvent) and high temperatures and vacuum are used to remove the by-product and drive the reaction to completion. In addition to an ester or anhydride, a halide of the carboxylic acid may also be used under certain circumstances.

Additionally for preparation of polyesters of this type the preferred polyfunctional carboxylic acids or derivatives thereof are usually either saturated or unsaturated aliphatic or aromatic and contain 2 to 100 carbon atoms and more preferably 4 to 18 carbon atoms. In the polymerization of this type of polyester some applicable examples of carboxylic acids, which may be employed as such or as derivatives thereof, includes aliphatic polyfunctional carboxylic acids such as oxalic, malonic, citric, succinic, malic, tartaric, fumaric, maleic, glutaric, glutamic, adipic, glucaric, pimelic, suberic, azelaic, sebacic, dodecanedioic acid, etc. and cyclic aliphatic polyfunctional carboxylic acids such as cyclopropane dicarboxylic acid, cyclobutane dicarboxylic acid, cyclohexane dicarboxylic acid, etc. and aromatic polyfunctional carboxylic acids such as terephthalic, isophthalic, phthalic, trimellitic, pyromellitic and naphthalene 1,4-, 2,3-, 2,6-dicarboxylic acids and the like.

For the purpose of illustration and not limitation, some examples of carboxylic acid derivatives include hydroxy acids such as 3-hydroxy propionic acid and 6-hydroxycaproic acid and anhydrides, halides or esters of acids, for example dimethyl or diethyl esters, corresponding to the already mentioned acids, which means esters such as dimethyl or diethyl oxalate, malonate, succinate, fumarate, maleate, glutarate, adipate, pimelate, suberate, azelate, sebacate, dodecanedioate, terephthalate, isophthalate, phthalate, etc. Generally speaking, methyl esters are sometimes more preferred than ethyl esters due to the fact that higher boiling alcohols are more difficult to remove than lower boiling alcohols.

Furthermore, the usually preferred polyfunctional alcohols contain 2 to 100 carbon atoms as for instance polyglycols and polyglycerols. In the polymerization process of this type of polyester some applicable examples of alcohols, which may be employed as such or as derivatives thereof, includes polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, glycerol, trimethylolpropane, pentaerythritol, sorbitol, mannitol, etc. For the purpose of illustration and not limitation, some examples of alcohol derivatives include triacetin, glycerol palmitate, glycerol sebacate, glycerol adipate, tripropionin, etc.

Additionally, with regard to polymerization of polyesters of this type the chainstoppers sometimes used are monofunctional compounds. They are preferably either monohydroxy alcohols containing 1-20 carbon atoms or monocarboxylic acids containing 2-26 carbon atoms. General examples are medium or long-chain fatty alcohols or acids, and specific examples include monohydroxy alcohols such as methanol, ethanol, butanol, hexanol, octanol, etc. and lauryl alcohol, myristyl alcohol, cetyl alcohol, stearyl alcohol, stearic alcohol, etc. and monocarboxylic acids such as acetic, lauric, myristic, palmitic, stearic, arachidic, cerotic, dodecylenic, palmitoleic, oleic, linoleic, linolenic, erucic, benzoic, naphthoic acids and substituted napthoic acids, 1-methyl-2 naphthoic acid and 2-isopropyl-1-naphthoic acid, etc. Moreover an acid catalyst or a transesterification catalyst is typically used in the polymerization of polyesters of this type and non-limiting examples of those are the metal catalysts such as acetates of manganese, zinc, calcium, cobalt or magnesium, and antimony(III)oxide, germanium oxide or halide and tetraalkoxygermanium, titanium alkoxide, zinc or aluminum salts.

Suitable enzymes in accordance with the general principles in manufacturing an embodiment within the scope of the present invention may be identified as belonging to six classes according to their function: Oxidoreductases, transferases, hydrolases, lyases, isomerases and ligases. Oxidoreductases catalyze oxidation-reduction reactions, and the substrate oxidized is regarded as hydrogen or electron donor. Transferases catalyze transfer of functional groups from one molecule to another. Hydrolases catalyze hydrolytic cleavage of various bonds. Lyases catalyze cleavage of various bonds by other means than by hydrolysis or oxidation, meaning for example that they catalyze removal of a group from or addition of a group to a double bond, or other cleavages involving electron rearrangement. Isomerases catalyze intramolecular rearrangement, meaning changes within one molecule. Ligases catalyze reactions in which two molecules are joined.

Some preferred enzymes according to the invention are oxidoreductases, which may act on different groups of donors, such as the CH-OH group, the aldehyde or oxo group, the CH-CH group, the $CH-NH_2$ group, the CH-NH group, NADH or NADPH, nitrogenous compounds, a sulfur group, a heme group, diphenols and related substances, hydrogen, single donors with incorporation of molecular oxygen, paired donors with incorporation or reduction of molecular oxygen or others. Oxidoreductases may also be acting on $CH_2$ groups or X-H and Y-H to form an X-Y bond. Typically enzymes belonging to the group of oxidoreductases may be referred to as oxidases, oxygenases, hydrogenases, dehydrogenases, reductases or the like.

Specific examples of oxidoreductases comprise oxidases such as malate oxidase, glucose oxidase, hexose oxidase, aryl-alcohol oxidase, alcohol oxidase, long-chain-alcohol oxidase, glycerol-3-phosphate oxidase, polyvinyl-alcohol oxidase, D-arabinono-1,4-lactone oxidase, D-mannitol oxidase, xylitol oxidase, oxalate oxidase, carbon-monoxide oxidase, 4-hydroxyphenylpyruvate oxidase, dihydrouracil oxidase, ethanolamine oxidase, L-aspartate oxidase, sarcosine oxidase, urate oxidase, methanethiol oxidase, 3-hydroxyanthranilate oxidase, laccase, catalase, fatty-acid peroxidase , peroxidase, diarylpropane peroxidase, ferroxidase, pteridine oxidase, columbamine oxidase and the like.

Further specific examples of oxidoreductases comprise oxygenases such as catechol 1,2-dioxygenase, gentisate 1,2-dioxygenase, homogentisate 1,2-dioxygenase, lipoxygenase, ascorbate 2,3-dioxygenase, 3-carboxyethylcatechol 2,3-dioxygenase, indole 2,3-dioxygenase, caffeate 3,4-dioxygenase, arachidonate 5-lipoxygenase, biphenyl-2,3-diol 1,2-dioxygenase, linoleate 11-lipoxygenase, acetylacetone-cleaving enzyme, lactate 2-monooxygenase, phenylalanine 2-monooxygenase, inositol oxygenase and the like.

Further specific examples of oxidoreductases comprise dehydrogenases such as alcohol dehydrogenase, glycerol dehydrogenase, propanediol-phosphate dehydrogenase, L-lactate dehydrogenase, D-lactate dehydrogenase, glycerate dehydrogenase, glucose 1-dehydrogenase, galactose 1-dehydrogenase, allyl-alcohol dehydrogenase, 4-hydroxybutyrate dehydrogenase, octanol dehydrogenase, aryl-alcohol dehydrogenase, cyclopentanol dehydrogenase, long-chain-3-hydroxyacyl-CoA dehydrogenase, L-lactate dehydrogenase, D-lactate dehydrogenase, butanal dehydrogenase, terephthalate 1,2-*cis*-dihydrodiol dehydrogenase, succinate dehydrogenase, glutamate dehydrogenase, glycine dehydrogenase, hydrogen dehydrogenase, 4-cresol dehydrogenase, phosphonate dehydrogenase and the like.

Specific examples of reductases belonging to the group of oxidoreductases comprise enzymes such as diethyl 2-methyl-3-oxosuccinate reductase, tropinone reductase, long-chain-fatty-acyl-CoA reductase, carboxylate reductase, D-proline reductase, glycine reductase and the like.

Other preferred enzymes according to the invention are lyases, which may belong to either of the following groups: carbon-carbon lyases, carbon-oxygen lyases, carbon-nitrogen lyases, carbon-sulfur lyases, carbon-halide lyases, phosphorus-oxygen lyases and other lyases.

Among carbon-carbon lyases are carboxy-lyases, aldehyde-lyases, oxo-acid-lyases and others. Some specific examples belonging to those groups are oxalate decarboxylase, acetolactate decarboxylase, aspartate 4-decarboxylase, lysine decarboxylase, aromatic-L-amino-acid decarboxylase, methylmalonyl-CoA decarboxylase, carnitine decarboxylase, indole-3-glycerol-phosphate synthase, gallate decarboxylase, branched-chain-2-oxoacid, decarboxylase, tartrate decarboxylase, arylmalonate decarboxylase, fructose-bisphosphate aldolase, 2-dehydro-3-deoxy-phosphogluconate aldolase, trimethylamine-oxide aldolase, propioin synthase, lactate aldolase, vanillin synthase, isocitrate lyase, hydroxymethylglutaryl-CoA lyase, 3-hydroxyaspartate aldolase, tryptophanase, deoxyribodipyrimidine photo-lyase, octadecanal decarbonylase and the like.

Among carbon-oxygen lyases are hydro-lyases, lyases acting on polysaccharides, phosphates and others. Some specific examples are carbonate dehydratase, fumarate hydratase, aconitate hydratase, citrate dehydratase, arabinonate dehydratase, galactonate dehydratase, altronate dehydratase, mannonate dehydratase, dihydroxy-acid dehydratase, 3-dehydroquinate dehydratase, propanediol dehydratase, glycerol dehydratase, maleate hydratase, oleate hydratase, pectate lyase, poly(β-D-mannuronate) lyase, oligogalacturonide lyase, poly(α-L-guluronate) lyase, xanthan lyase, ethanolamine-phosphate phospho-lyase, carboxymethyloxysuccinate lyase and others.

Among carbon-nitrogen lyases are ammonia-lyases, lyases acting on amides, amidines, etc., amine-lyases and others. Specific examples of those groups of lyases are aspartate ammonia-lyase, phenylalanine ammonia-lyase, ethanolamine ammonia-lyase, glucosaminate ammonia-lyase, argininosuccinate lyase, adenylosuccinate lyase, ureidoglycolate lyase, 3-ketovalidoxylamine C-N-lyase

Among carbon-sulfur lyases are some specific examples such as dimethylpropiothetin dethiomethylase, alliin lyase, lactoylglutathione lyase and cysteine lyase.

Among carbon-halide lyases are som specific examples such as 3-chloro-D-alanine dehydrochlorinase or dichloromethane dehalogenase.

Among phosphorus-oxygen lyases are some specific examples such as adenylate cyclase, cytidylate cyclase, glycosylphosphatidylinositol diacylglycerol-lyase.

In the most preferred embodiments of the invention, the applied enzymes are hydrolases comprising glycosylases, enzymes acting on acid anhydrides and enzymes acting on specific bonds such as ester bonds, ether bonds, carbon-nitrogen bonds, peptide bonds, carbon-carbon bonds, halide bonds, phosphorus-nitrogen bonds, sulfur-nitrogen bonds, carbon-phosphorus bonds, sulfur-sulfur bonds or carbon-sulfur bonds.

Among the glycosylases the prefered enzymes are glycosidases, which are capable of hydrolysing O- and S-glycosyl compounds or N-glycosyl compounds. Some examples of glycosylases are α-amylase, β-amylase, glucan 1,4-α-glucosidase, cellulase, endo-1,3(4)-β-glucanase, inulinase, endo-1,4-β-xylanase, oligo-1,6-glucosidase, dextranase, chitinase, polygalacturonase, lysozyme, levanase, quercitrinase, galacturan 1,4-α-galacturonidase, isoamylase, glucan 1,6-α-glucosidase, glucan endo-1,2-β-glucosidase, licheninase, agarase, exo-poly-α-galacturonosidase, κ-carrageenase, steryl-β-glucosidase, strictosidine β-glucosidase, mannosyl-oligosaccharide glucosidase, lactase, oligoxyloglucan β-glycosidase, polymannuronate hydrolase, chitosanase, poly(ADP-ribose) glycohydrolase, purine nucleosidase, inosine nucleosidase, uridine nucleosidase, adenosine nucleosidase and others.

Among enzymes acting on acid anhydrides are for instance those acting on phosphorus- or sulfonyl-containing anhydrides. Some examples of enzymes acting on acid anhydrides are inorganic diphosphatase, trimetaphosphatase, adenosine-triphosphatase, apyrase, nucleoside-diphosphatase, acylphosphatase, nucleotide diphosphatase, endopolyphosphatase, exopolyphosphatase, nucleoside phospho-acylhydrolase, triphosphatase, CDP-diacylglycerol-diphosphatase, undecaprenyl-diphosphatase, dolichyldiphosphatase, oligosaccharide-diphosphodolichol diphosphatase, heterotrimeric G-protein GTPase, small monomeric GTPase, dynamin GTPase, tubulin GTPase, diphosphoinositol-polyphosphate diphosphatase, H$^+$-exporting ATPase, monosaccharide-transporting ATPase, maltose-transporting ATPase, glycerol-3-phosphate-transporting ATPase, oligopeptide-transporting ATPase, polyamine-transporting ATPase, peptide-transporting ATPase, fatty-acyl-CoA-transporting ATPase, protein-secreting ATPase and others.

Most preferred enzymes of the present invention are those acting on ester bonds, among which are carboxylic ester hydrolases, thiolester hydrolases, phosphoric ester hydrolases, sulfuric ester hydrolases and ribonucleases. Some examples of enzymes acting on ester bonds are acetyl-CoA hydrolase, palmitoyl-CoA hydrolase, succinyl-CoA hydrolase, 3-hydroxyisobutyryl-CoA hydrolase, hydroxymethylglutaryl-CoA hydrolase, hydroxyacylglutathione hydrolase, glutathione thiolesterase, formyl-CoA hydrolase, acetoacetyl-CoA hydrolase, *S*-formylglutathione hydrolase, *S*-succinyl-glutathione hydrolase, oleoyl-[acyl-carrier-protein] hydrolase, ubiquitin thiolesterase, [citrate-(*pro*-3S)-lyase] thiolesterase, (*S*)-methylmalonyl-CoA hydrolase, ADP-dependent short-chain-acyl-CoA hydrolase, ADP-dependent medium-chain-acyl-CoA hydrolase, acyl-CoA hydrolase, dodecanoyl-[acyl-carrier protein] hydrolase, palmitoyl-(protein) hydrolase, 4-hydroxybenzoyl-CoA thioesterase, 2-(2-hydroxyphenyl)benzenesulfinate hydrolase, alkaline phosphatase, acid phosphatase, phosphoserine phosphatase, phosphatidate phosphatase, 5'-nucleotidase, 3'-nucleotidase, 3'(2'),5'-bisphosphate nucleotidase, 3-phytase, glucose-6-phosphatase, glycerol-2-phosphatase, phosphoglycerate phosphatase, glycerol-1-phosphatase, mannitol-1-phosphatase, sugar-phosphatase, sucrose-phosphatase, inositol-1 (or 4)-monophosphatase, 4-phytase, phosphatidylglycerophosphatase, ADPphosphoglycerate phosphatase, *N*-acylneuraminate-9-phosphatase, nucleotidase, polynucleotide 3'-phosphatase, [glycogen-synthase-D] phosphatase, [pyruvate dehydrogenase (lipo-amide)]-phosphatase, [acetyl-CoA carboxylase]-phosphatase, 3-deoxy-*manno*-octulosonate-8-phosphatase, polynucleotide 5'-phosphatase, sugar-terminal-phosphatase, alkylacetylglycerophosphatase, 2-deoxyglucose-6-phosphatase, glucosylglycerol 3-phosphatase, 5-phytase, phosphodiesterase I, glycerophosphocholine phosphodiesterase, phospholipase C, phospholipase D, phosphoinositide phospholipase C, sphingomyelin phosphodiesterase, glycerophosphocholine cholinephosphodiesterase, alkylglycerophosphoethanolamine phosphodiesterase, glycerophosphoinositol glycerophosphodiesterase, arylsulfatase, steryl-sulfatase, glycosulfatase, choline-sulfatase, cellulose-polysulfatase, monomethyl-sulfatase, D-lactate-2-sulfatase, glucuronate-2-sulfatase, prenyl-diphosphatase, aryldialkylphosphatase, diisopropyl-fluorophosphatase, oligonucleotidase, poly(A)-specific ribonuclease, yeast ribonuclease, deoxyribonuclease (pyrimidine dimer), *Physarum polycephalum* ribonuclease, ribonuclease alpha, *Aspergillus* nuclease S$_1$, *Serratia marcescens* nuclease and more.

The most preferred enzymes acting on ester bonds are carboxylic ester hydrolases such as carboxylesterase, arylesterase, triacylglycerol lipase, phospholipase A$_2$, lysophospholipase, acetylesterase, acetylcholinesterase, cholinesterase, tropinesterase, pectinesterase, sterol esterase, chlorophyllase, L-arabinonolactonase, gluconolactonase, uronolactonase, tannase, retinyl-palmitate esterase, hydroxybutyrate-dimer, hydrolase, acylglycerol lipase, 3-oxoadipate *enol*-lactonase, 1,4-lactonase, galactolipase, 4-pyridoxolactonase, acylcarnitine hydrolase, aminoacyl-tRNA hydrolase, D-arabinonolactonase, 6-phosphogluconolactonase, phospholipase A$_1$, 6-acetylglucose deacetylase, lipoprotein lipase, dihydrocoumarin hydrolase, limonin-D-ring-lactonase, steroid-lactonase, triacetate-lactonase, actinomycin lactonase, orsellinate-depside, hydrolase, cephalosporin-C deacetylase, chlorogenate hydrolase, α-amino-acid, esterase, 4-methyloxaloacetate esterase, carboxymethylenebutenolidase, deoxylimonate A-ring-lactonase, 1-alkyl-2-acetylglycerophosphocholine esterase, fusarinine-C ornithinesterase, sinapine esterase, wax-ester hydrolase, phorbol-diester hydrolase, phosphatidylinositol deacylase, sialate O-acetylesterase, acetoxybutynylbithiophene deacetylase, acetylsalicylate deacetylase, methylumbelliferyl-acetate deacetylase, 2-pyrone-4,6-dicarboxylate lactonase, *N*-acetylgalactosaminoglycan deacetylase, juvenile-hormone esterase, bis(2-ethylhexyl)phthalate esterase, protein-glutamate, methylesterase, 11-*cis*-retinyl-palmitate hydrolase, *all-trans*-retinyl-palmitate hydrolase, L-rhamnono-1,4-lactonase, 5-(3,4-diacetoxybut-1-ynyl)-2,2'-bithiophene deacetylase, fatty-acyl-ethyl-ester synthase, xylono-1,4-lactonase, cetraxate benzylesterase, acetylalkylglycerol acetylhydrolase, acetylxylan esterase, feruloyl esterase, cutinase, poly(3-hydroxybutyrate) depolymerase, poly(3-hydroxyoctanoate), depolymerase acyloxyacyl hydrolase, acyloxyacyl hydrolase, polyneuridine-aldehyde esterase and others.

Accordingly, enzymes acting on ether bonds include trialkylsulfonium hydrolases and ether hydrolases. Enzymes acting on ether bonds may act on both thioether bonds and on the oxygen equivalent. Specific enzyme examples belonging to these groups are adenosylhomocysteinase, adenosylmethionine hydrolase, isochorismatase, alkenylglycerophosphocholine hydrolase, epoxide hydrolase, *trans*-epoxysuccinate hydrolase, alkenylglycerophosphoethanolamine hydrolase, leukotriene-A$_4$ hydrolase, hepoxilin-epoxide hydrolase and limonene-1,2-epoxide hydrolase.

Among enzymes acting on carbon-nitrogen bonds are linear amides, cyclic amides, linear amidines, cyclic amidines, nitriles and other compounds. Specific examples belonging to these groups are asparaginase, glutaminase, ω-amidase, amidase, urease, β-ureidopropionase, arylformamidase, biotinidase, aryl-acylamidase, amino-acylase, aspartoacylase, acetylornithine deacetylase, acyl-lysine deacylase, succinyl-diaminopimelate desuccinylase, pantothenase, ceramidase, choloylglycine hydrolase, *N*-acetylglucosamine-6-phosphate deacetylase, *N*-acetylmuramoyl-L-alanine amidase, 2-(acetamidomethylene)succinate hydrolase, 5-aminopentanamidase, formylmethionine deformylase, hippurate hydrolase, *N*-acetylglucosamine deacetylase, D-glutaminase, *N*-methyl-2-oxoglutaramate hydrolase, glutamin-(asparagin-)ase, alkylamidase, acylagmatine amidase, chitin deacetylase, peptidyl-glutaminase, *N*-carbamoylsarcosine amidase, *N*-(long-chain-acyl)ethanolamine deacylase, mimosinase, acetylputrescine deacetylase, 4-acetamidobutyrate deacetylase, theanine hydrolase, 2-(hydroxymethyl)-3-(acetamidomethylene)succinate hydrolase, 4-methyleneglutaminase, *N*-formylglutamate deformylase, glycosphingolipid deacylase, aculeacin-A deacylase, peptide deformylase, dihydropyrimidinase, dihydroorotase, carboxymethyl-hydantoinase, creatininase, L-lysine-lactamase, arginase, guanidinoacetase, creatinase, allantoicase, cytosine deaminase, riboflavinase, thiaminase, 1-aminocyclo-propane-1-carboxylate deamin and more.

Some preferred enzymes of the present invention belong to the group of enzymes acting on peptide bonds, which group is also referred to as peptidases. Peptidases can be further divided into exopeptidases that act only near a terminus of a polypeptide chain and endopeptidases that act internally in polypeptide chains. Enzymes acting on peptide bonds include enzymes selected from the group of aminopeptidases, dipeptidases, di- or tripeptidyl-peptidases, peptidyl-dipeptidases, serine-type carboxypeptidases, metallocarboxypeptidases, cysteine-type carboxypeptidases, omega peptidases, serine endopeptidases, cysteine endopeptidases, aspartic endopeptidases, metalloendopeptidases and threonine endopeptidases. Some specific examples of enzymes belonging to these groups are cystinyl aminopeptidase, tripeptide aminopeptidase, prolyl aminopeptidase, arginyl aminopeptidase, glutamyl aminopeptidase, cytosol alanyl aminopeptidase, lysyl aminopeptidase, Met-X dipeptidase, non-stereospecific dipeptidase, cytosol nonspecific dipeptidase, membrane dipeptidase, dipeptidase E, dipeptidyl-peptidase I, dipeptidyl-dipeptidase, tripeptidyl-peptidase I, tripeptidyl-peptidase II, X-Pro dipeptidyl-peptidase, peptidyl-dipeptidase A, lysosomal Pro-X carboxypeptidase, carboxypeptidase C, acylaminoacyl-peptidase, peptidyl-glycinamidase, β-aspartyl-peptidase, ubiquitinyl hydrolase 1, chymotrypsin, chymotrypsin C, metridin, trypsin, thrombin, plasmin, enteropeptidase, acrosin, α-Lytic endopeptidase, glutamyl endopeptidase, cathepsin G, cucumisin, prolyl oligopeptidase, brachyurin, plasma kallikrein, tissue kallikrein, pancreatic elastase, leukocyte elastase, chymase, cerevisin, hypodermin C, lysyl endopeptidase, endopeptidase La, γ-renin, venombin AB, leucyl endopeptidase, tryptase, scutelarin, kexin, subtilisin, oryzin, endopeptidase K, thermomycolin, thermitase, endopeptidase So, t-plasminogen activator, protein C (activated), pancreatic endopeptidase E, pancreatic elastase II, IgA-specific serine endopeptidase, u-plasminogen activator, venombin A, furin, myeloblastin, semenogelase, granzyme A, granzyme B, streptogrisin A, streptogrisin B, glutamyl endopeptidase II, oligopeptidase B, omptin, togavirin, flavivirin, endopeptidase Clp, proprotein convertase 1, proprotein convertase 2, lactocepin, assemblin, hepacivirin, spermosin, pseudomonalisin, xanthomonalisin, C-terminal processing peptidase, physarolisin, cathepsin B, papain, ficain, chymopapain, asclepain, clostripain, streptopain, actinidain, cathepsin L, cathepsin H, cathepsin T, glycyl endopeptidase, cancer procoagulant, cathepsin S, picornain 3C, picornain 2A, caricain, ananain, stem bromelain, fruit bromelain, legumain, histolysain, caspase-1, gingipain R, cathepsin K, adenain, bleomycin hydrolase, cathepsin F, cathepsin O, cathepsin V, nuclear-inclusion-a endopeptidase, helper-component proteinase, L-peptidase, gingipain K, staphopain, separate, V-cath endopeptidase, cruzipain, calpain-1, calpain-2, pepsin A, pepsin B, gastricsin, chymosin, cathepsin D, nepenthesin, renin, Pro-opiomelanocortin converting enzyme, aspergillopepsin I, aspergillopepsin II, penicillopepsin, rhizopuspepsin, endothiapepsin, mucorpepsin, candidapepsin, saccharopepsin, rhodotorulapepsin, acrocylindropepsin, polyporopepsin, pycnoporopepsin, scytalidopepsin A, scytalidopepsin B, cathepsin E, barrierpepsin, signal peptidase II, plasmepsin I, plasmepsin II, phytepsin, yapsin 1, thermopsin, prepilin peptidase, nodavirus endopeptidase, memapsin 1, memapsin 2, atrolysin A, microbial collagenase, leucolysin, stromelysin 1, meprin A, procollagen C-endopeptidase, astacin, pseudolysin, thermolysin, bacillolysin, aureolysin, coccolysin, mycolysin, gelatinase B, leishmanolysin, saccharolysin, gametolysin, serralysin, horrilysin, ruberlysin, bothropasin, oligopeptidase A, endothelin-converting enzyme, ADAM10 endopeptidase and others.

Suitable enzymes acting on carbon-carbon bonds, which may be found in ketonic substances include, but are not limited to oxaloacetase, fumarylacetoacetase, kynureninase, phloretin hydrolase, acylpyruvate hydrolase, acetylpyruvate hydrolase, β-diketone hydrolase, 2,6-dioxo-6-phenylhexa-3-enoate hydrolase, 2-hydroxymuconate-semialdehyde hydrolase and cyclohexane-1,3-dione hydrolase.

Examples of enzymes within the group acting on halide bonds are alkylhalidase, 2-haloacid dehalogenase, haloacetate dehalogenase, thyroxine deiodinase, haloalkane dehalogenase, 4-chlorobenzoate dehalogenase, 4-chlorobenzoyl-CoA dehalogenase, atrazine chlorohydrolase and the like.

Further examples according to the present invention of enzymes acting on specific bonds are phosphoamidase, *N*-sulfoglucosamine sulfohydrolase, cyclamate sulfohydrolase, phosphonoacetaldehyde hydrolase, phosphonoacetate hydrolase, trithionate hydrolase, UDPsulfoquinovose synthase, lipase from Rhizopus arrhizus from Sigma and the like.

Further suitable enzymes known for hydrolyzing poly(lactic acid) includes pronase, proteinase K, bromelain, ficin, esterase, trypsin and the like.

According to the present invention enzymes added in biodegradable chewing gum may be of one type alone or different types in combination.

Some enzymes require co-factors to be effective. Examples of such co-factors are 5,10-methenyltetrahydrofolate, ammonia, ascorbate, ATP, bicarbonate, bile salts, biotin, bis(molybdopterin guanine dinucleotide)molybdenum cofactor, cadmium, calcium, cobalamin, cobalt, coenzyme F430, coenzyme-A, copper, dipyrromethane, dithiothreitol, divalent cation, FAD, flavin, flavoprotein, FMN, glutathione, heme, heme-thiolate, iron, iron(2+), iron-molybdenum, iron-sulfur, lipoyl group, magnesium, manganese, metal ions, molybdenum, molybdopterin, monovalent cation, NAD, NAD(P)H, nickel, potassium, PQQ, protoheme IX, pyridoxal-phosphate, pyruvate, selenium, siroheme, sodium, tetrahydropteridine, thiamine diphosphate, topaquinone, tryptophan tryptophylquinone (TTQ), tungsten, vanadium and zinc.

In accordance with the general principles in manufacturing a chewing gum within the scope of the invention, variations of different suitable ingredients are listed and explained below.

The chewing gum according to the invention may comprise coloring agents. According to an embodiment of the invention, the chewing gum may comprise color agents and whiteners such as FD&C-type dyes and lakes, fruit and vegetable extracts, titanium dioxide and combinations thereof.

Further useful chewing gum base components include antioxidants, e.g. butylated hydroxytoluene (BHT), butyl hydroxyanisol (BHA), propylgallate and tocopherols, and preservatives.

A gum base formulation may, in accordance with the present invention, comprise one or more softening agents e.g. sucrose esters including those disclosed in WO 00/25598, which is incorporated herein by reference, tallow, hydrogenated tallow, hydrogenated and partially hydrogenated vegetable oils, cocoa butter, degreased cocoa powder, glycerol monostearate, glyceryl triacetate, lecithin, mono-, di- and triglycerides, acetylated monoglycerides, fatty acids (e.g. stearic, palmitic, oleic and linoleic acids) and combinations thereof. As used herein the term "softener" designates an ingredient, which softens the gum base or chewing gum formulation and encompasses waxes, fats, oils, emulsifiers, surfactants and solubilisers.

To soften the gum base further and to provide it with water-binding properties, which confer to the gum base a pleasant smooth surface and reduce its adhesive properties, one or more emulsifiers is/are usually added to the composition, typically in an amount of 0 to 18% by weight, preferably 0 to 12% by weight of the gum base. Mono- and diglycerides of edible fatty acids, lactic acid esters and acetic acid esters of mono- and diglycerides of edible fatty acids, acetylated mono and diglycerides, sugar esters of edible fatty acids, Na-, K-, Mg- and Ca-stearates, lecithin, hydroxylated lecithin and the like are examples of conventionally used emulsifiers which can be added to the chewing gum base. In case of the presence of a biologically or pharmaceutically active ingredient as defined below, the formulation may comprise certain specific emulsifiers and/or solubilisers in order to disperse and release the active ingredient.

Waxes and fats are conventionally used for the adjustment of the consistency and for softening of the chewing gum base when preparing chewing gum bases. In connection with the present invention, any conventionally used and suitable type of wax and fat may be used, such as for instance rice bran wax, polyethylene wax, petroleum wax (refined paraffin and microcrystalline wax), paraffin, beeswax, carnauba wax, candelilla wax, cocoa butter, degreased cocoa powder and any suitable oil or fat, as e.g. completely or partially hydrogenated vegetable oils or completely or partially hydrogenated animal fats.

In an embodiment of the invention, the chewing gum comprises filler.

A chewing gum base formulation may, if desired, include one or more fillers/texturisers including as examples, magnesium and calcium carbonate, sodium sulphate, ground limestone, silicate compounds such as magnesium and aluminum silicate, kaolin and clay, aluminum oxide, silicium oxide, talc, titanium oxide, mono-, di- and tri-calcium phosphates, cellulose polymers, such as wood, and combinations thereof.

In addition to a water insoluble gum base portion, a typical chewing gum includes a water soluble bulk portion and one or more flavoring agents. The water-soluble portion may include bulk sweeteners, high intensity sweeteners, flavoring agents, softeners, emulsifiers, colors, acidulants, fillers, antioxidants, and other components that provide desired attributes.

Combinations of sugar and/or non-sugar sweeteners can be used in the chewing gum formulation processed in accordance with the invention. Additionally, the softener may also provide additional sweetness such as aqueous sugar or alditol solutions.

Useful sugar sweeteners are saccharide-containing components commonly known in the chewing gum art including, but not limited to, sucrose, dextrose, maltose, dextrins, trehalose, D-tagatose, dried invert sugar, fructose, levulose, galactose, corn syrup solids, and the like, alone or in combination.

Sorbitol can be used as a non-sugar sweetener. Other useful non-sugar sweeteners include, but are not limited to, other sugar alcohols such as mannitol, xylitol, hydrogenated starch hydrolysates, maltitol, isomaltol, erythritol, lactitol and the like, alone or in combination.

High-intensity artificial sweetening agents can also be used alone or in combination with the above sweeteners. Preferred high-intensity sweeteners include, but are not limited to sucralose, aspartame, salts of acesulfame, alitame, neotame, twinsweet, saccharin and its salts, cyclamic acid and its salts, glycyrrhizin, dihydrochalcones, thaumatin, monellin, stevioside and the like, alone or in combination. In order to provide longer lasting sweetness and flavor perception, it may be desirable to encapsulate or otherwise control the release of at least a portion of the artificial sweetener. Techniques such as wet granulation, wax granulation, spray drying, spray chilling, fluid bed coating, coascervation, encapsulation in yeast cells and fiber extrusion may be used to achieve the desired release characteristics. Encapsulation of sweetening agents can also be provided using another chewing gum component such as a resinous compound.

Usage level of the high intensity artificial sweetener will vary considerably and will depend on factors such as potency of the sweetener, rate of release, desired sweetness of the product, level and type of flavor used and cost considerations. Thus, the active level of high potency artificial sweetener may vary from about 0 to about 8 % by weight, preferably 0.001 to about 5 % by weight. When carriers used for encapsulation are included, the usage level of the encapsulated sweetener will be proportionately higher.

If a low-calorie gum is desired, a low-caloric bulking agent can be used. Examples of low caloric bulking agents include polydextrose, Raftilose, Raftilin, fructooligosaccharides (NutraFlora®, palatinose oligosaccharides; guar gum hydrolysates (e.g. Sun Fiber®) or indigestible dextrins (e.g. Fibersol®). However, other low-calorie bulking agents can be used.

The chewing gum according to the present invention may contain aroma agents and flavoring agents including natural and synthetic flavorings e.g. in the form of natural vegetable components, essential oils, essences, extracts, powders, including acids and other substances capable of affecting the taste profile. Examples of liquid and powdered flavorings include coconut, coffee, chocolate, vanilla, grape fruit, orange, lime, menthol, liquorice, caramel aroma, honey aroma, peanut, walnut, cashew, hazelnut, almonds, pineapple, strawberry, raspberry, tropical fruits, cherries, cinnamon, peppermint, wintergreen, spearmint, eucalyptus, and mint, fruit essence such as from apple, pear, peach, strawberry, apricot, raspberry, cherry, pineapple, and plum essence. The essential oils include peppermint, spearmint, menthol, eucalyptus, clove oil, bay oil, anise, thyme, cedar leaf oil, nutmeg, and oils of the fruits mentioned above.

The chewing gum flavor may be a natural flavoring agent, which is freeze-dried, preferably in the form of a powder, slices or pieces or combinations thereof. The particle size may be less than 3 mm, less than 2 mm or more preferred less than 1 mm, calculated as the longest dimension of the particle. The natural flavoring agent may in a form where the particle size is from about 3 $\mu$m to 2 mm, such as from 4 $\mu$m to 1 mm. Preferred natural flavoring agents include seeds from fruit e.g. from strawberry, blackberry and raspberry.

Various synthetic flavors, such as mixed fruit flavors may also be used in the present chewing gum centers. As indicated above, the aroma agent may be used in quantities smaller than those conventionally used. The aroma agents and/or flavors may be used in the amount from 0.01 to about 30% by weight of the final product depending on the desired intensity of the aroma and/or flavor used. Preferably, the content of aroma/flavor is in the range of 0.2 to 3% by weight of the total composition.

In an embodiment of the invention, the flavoring agents comprise natural and synthetic flavorings in the form of natural vegetable components, essential oils, essences, extracts, powders, including acids and other substances capable of affecting the taste profile.

In one embodiment of the invention, the flavor may be used as taste masking in chewing gum comprising active ingredients, which by themselves have undesired taste or which alter the taste of the formulation.

Further chewing gum ingredients, which may be included in the chewing gum according to the present invention, include surfactants and/or solubilisers, especially when pharmaceutically or biologically active ingredients are present. As examples of types of surfactants to be used as solubilisers in a chewing gum composition according to the invention, reference is made to H.P. Fiedler, Lexikon der Hilfsstoffe für Pharmacie, Kosmetik und Angrenzende Gebiete, pages 63-64 (1981) and the lists of approved food emulsifiers of the individual countries. Anionic, cationic, amphoteric or non-ionic solubilisers can be used. Suitable solubilisers include lecithin, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters of interesterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable solubilisers are polyoxyethylene stearates, such as for instance polyoxyethylene(8)stearate and polyoxyethylene(40)stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllatylate, sodium laurylsulfate, polyoxyethylated hydrogenated castor oil, blockcopolymers of ethylene oxide and propyleneoxide and polyoxyethylene fatty alcohol ether. The solubiliser may either be a single compound or a combination of several compounds. In the presence of an active ingredient, the chewing gum may preferably also comprise a carrier known in the art.

In one embodiment the chewing gum according to the invention comprises a pharmaceutically, cosmetically or biologically active substance. Examples of such active substances, a comprehensive list of which is found e.g. in WO 00/25598, which is incorporated herein by reference, include drugs, dietary supplements, antiseptic agents, pH-adjusting agents, anti-smoking agents and substances for the care or treatment of the oral cavity and teeth such as hydrogen peroxide and compounds capable of releasing urea during chewing.

Examples of active agents in the form of antiseptics are for instance salts and compounds of guanidine and biguanidine (for instance chlorhexidine diacetate) and the following types of substances with limited water-solubility: quaternary ammonium compounds (for instance ceramine, chloroxylenol, crystal violet, chloramine), aldehydes (for instance paraformaldehyde), compounds of dequaline, polynoxyline, phenols (for instance thymol, para chlorophenol, cresol) hexachlorophene, salicylic anilide compounds, triclosan, halogenes (iodine, iodophores, chloroamine, dichlorocyanuric acid salts), alcools (3,4 dichlorobenzyl alcohol, benzyl alcohol, phenoxyethanol, phenylethanol), cf. furthermore Martindale, The Extra Pharmacopoeia, 28th edition, page 547-578; metal salts, complexes and compounds with limited water-solubility, such as aluminum salts, (for instance aluminum potassium sulfate AlK $(SO_4)$ 2, $12H_2O$) and furthermore salts, complexes and compounds of boron, barium, strontium, iron, calcium, zinc, (zinc acetate, zinc chloride, zinc gluconate), copper (copper chloride, copper sulfate), lead, silver, magnesium, sodium, potassium, lithium, molybdenum, vanadium should be included; other compositions for the care of mouth and teeth: for instance; salts, complexes and compounds containing fluorine (such as sodium fluoride, sodium monofluoro phosphate, amino fluorides, stannous fluoride), phosphates, carbonates and selenium.

Further active substances can be found in J. Dent.Res. Vol. 28 No. 2, pages 160-171, 1949.

Examples of active substances in the form of agents adjusting the pH in the oral cavity include: acids, such as adipinic acid, succinic acid, fumaric acid, or salts thereof or salts of citric acid, tartaric acid, malic acid, acetic acid, lactic acid, phosphoric acid and glutaric acid and acceptable bases, such as carbonates, hydrogen carbonates, phosphates, sulphates or oxides of sodium, potassium, ammonium, magnesium or calcium, especially magnesium and calcium.

Active ingredients may comprise the below-mentioned compounds or derivates thereof but are not limited thereto: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminum salts, Calcium salts, Ferro salts, Silver salts, Zincsalts, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminumaminoacetat, Cimetidine, Esomeprazole, Famotidine, Lansoprazole, Magnesiumoxide, Nizatide and or Ratinidine.

The active agents to be used in connection with the present invention may be any substance desired to be released from the chewing gum. If an accelerated rate of release is desired, corresponding to the effect obtained for the flavor, the primary substances are those with limited water solubility, typically below 10g /100 ml including substances which are entirely water insoluble. Examples are medicines, dietary supplements, oral compositions, anti-smoking agents, highly potent sweeteners, pH adjusting agents, etc.

Further examples of active ingredients include paracetamol, benzocaine, cinnarizine, menthol, carvone, coffeine, chlorhexidine-di-acetate, cyclizine hydrochloride, 1,8-cineol, nandrolone, miconazole, mystatine, aspartame, sodium fluoride, nicotine, saccharin, cetylpyridinium chloride, other quaternary ammonium compounds, vitamin E, vitamin A, vitamin D, glibenclamide or derivatives thereof, progesterone, acetylsalicylic acid, dimenhydrinate, cyclizine, metronidazole, sodium hydrogencarbonate, the active components from ginkgo, the active components from propolis, the active components from ginseng, methadone, oil of peppermint, salicylamide, hydrocortisone or astemizole.

Examples of active agents in the form of dietary supplements are for instance salts and compounds having the nutritive effect of vitamin B2 (riboflavin), B12, folic acid, niacine, biotine, poorly soluble glycerophosphates, amino acids, the vitamins A, D, E and K, minerals in the form of salts, complexes and compounds containing calcium, phosphorus, magnesium, iron, zinc, copper, iodine, manganese, chromium, selenium, molybdenum, potassium, sodium or cobalt.

Furthermore, reference is made to lists of nutrients accepted by the authorities in different countries such as for instance US code of Federal Regulations, Title 21, Section 182.5013.182 5997 and 182.8013-182.8997.

Examples of active agents in the form of compounds for the care or treatment of the oral cavity and the teeth are for instance bound hydrogen peroxide and compounds capable of releasing urea during chewing.

Examples of active agents in the form of anti-smoking agents include for instance: nicotine, tobacco powder or silver salts, for instance silver acetate, silver carbonate and silver nitrate.

Further examples of active agents are medicines of any type.

Examples of active agents in the form of medicines include caffeine, salicylic acid, salicyl amide and related substances (acetylsalicylic acid, choline salicylate, magnesium salicylate, sodium salicylate), paracetamol, salts of pentazocine (pentazocine hydrochloride and pentazocinelactate), buprenorphine hydrochloride, codeine hydrochloride and codeine phosphate, morphine and morphine salts (hydrochloride, sulfate, tartrate), methadone hydrochloride, ketobemidone and salts of ketobemidone (hydrochloride), beta-blockers, (propranolol), calcium antagonists, verapamil hydrochloride, nifedinpine as well as suitable substances and salts thereof mentioned in Pharm. Int., Nov. 85, pages 267-271, Barney H. Hunter and Robert L. Talbert, nitroglycerine, erythrityl tetranitrate, strychnine and salts thereof, lidocaine, tetracaine hydrochloride, etorphine hydrochloride, atropine, insulin, enzymes, polypeptides (oxytocin, gonadorelin, (LH. RH), desmopressin acetate (DDAVP), isoxsuprine hydrochloride, ergotamine compounds, chloroquine (phosphate, sulfate), isosorbide, demoxytocin, heparin.

Other active ingredients include beta-lupeol, Letigen, Sildenafil citrate and derivatives thereof.

Dental products include Carbami, CPP Caseine Phospho Peptide; Chlorhexidine, Chlorhexidine di acetate, Chlorhexidine Chloride, Chlorhexidine di gluconate, Hexetedine, Strontium chloride, Potassium Chloride, Sodium bicarbonate, Sodium carbonate, Fluor containing ingredients, Fluorides, Sodium fluoride, Aluminum fluoride, Ammonium fluoride, Calcium fluoride, Stannous fluoride, Other fluor containing ingredients Ammonium fluorosilicate, Potasium fluorosilicate, Sodium fluorosilicate, Ammonium monofluorphosphate, Calcium monofluorphosphate, Potassium monofluorphosphate, Sodium monofluorphosphate, Octadecentyl Ammonium fluoride, Stearyl Trihydroxyethyl Propylenediamine Dihydrofluoride, Vitamins include A, B1, B2, B6, B12, Folic acid, niacin, Pantothensyre, biotine, C, D, E, K.

Minerals include Calcium, phosphor, magnesium, iron, Zink, Cupper, lod, Mangan, Crom, Selene, Molybden. Other active ingredients include: Q10@, enzymes. Natural drugs including Ginkgo Biloba, ginger, and fish oil. The invention also relates to use of migraine drugs such as Serotonin antagonists: Sumatriptan, Zolmitriptan, Naratriptan, Rizatriptan, Eletriptan; nausea drugs such as Cyclizin, Cinnarizin, Dimenhydramin, Difenhydrinat; hay fever drugs such as Cetrizin, Loratidin, pain relief drugs such as Buprenorfin, Tramadol, oral disease drugs such as Miconazol, Amphotericin B, Triamcinolonaceton; and the drugs Cisaprid, Domperidon, Metoclopramid.

Generally, it is preferred that the chewing gum and the gum bases prepared according to the invention are based solely on biodegradable polymers. However, within the scope of the invention further conventional chewing gum elastomers or elastomer plasticizers may be applied. Thus, in an embodiment of the invention, the at least one biodegradable polymer comprises from at least 5% to at least 90% of the chewing gum polymers and where the rest of the polymers comprise polymers generally regarded as non-biodegradable, such as natural resins, synthetic resins and/or synthetic elastomers.

In an embodiment of the invention, said natural resin comprises terpene resins, e.g. derived from alpha-pinene, beta-pinene, and/or d-limonene, natural terpene resins, glycerol esters of gum rosins, tall oil rosins, wood rosins or other derivatives thereof such as glycerol esters of partially hydrogenated rosins, glycerol esters of polymerized rosins, glycerol esters of partially dimerised rosins, pentaerythritol esters of partially hydrogenated rosins, methyl esters of rosins, partially hydrogenated methyl esters of rosins or pentaerythritol esters of rosins and combinations thereof.

In an embodiment of the invention, said synthetic resin comprises polyvinyl acetate, vinyl acetate-vinyl laurate copolymers and mixtures thereof.

Materials to be used for the above-mentioned encapsulation methods for sweeteners might e.g. include Gelatine, Wheat protein, Soya protein, Sodium caseinate, Caseine, Gum arabic, Mod. starch, Hydrolyzed starches (maltodextrines), Alginates, Pectin, Carregeenan, Xanthan gum, Locus bean gum, Chitosan, Bees wax, Candelilla wax, Carnauba wax, Hydrogenated vegetable oils, Zein and/or Sucrose.

Generally, it is preferred that the chewing gum and the gum bases prepared according to the invention are based solely on biodegradable polymers.

However, within the scope of the invention, minor amounts of conventional synthetic chewing gum elastomers or elastomer plasticizers, examples of which are mentioned below, may be applied.

Examples of such generally non-biodegradable synthetic resins include polyvinyl acetate, vinyl acetate-vinyl laurate copolymers and mixtures thereof. Examples of non-biodegradable synthetic elastomers include, but are not limited to, synthetic elastomers listed in Food and Drug Administration, CFR, Title 21, Section 172,615, the Masticatory Substances, Synthetic) such as polyisobutylene. e.g. having a gel permeation chromatography (GPC) average molecular weight in the range of about 10,000 to 1,000,000 including the range of 50,000 to 80,000, isobutylene-isoprene copolymer (butyl elastomer), styrene-butadiene copolymers e.g. having styrene-butadiene ratios of about 1:3 to 3:1, polyvinyl acetate (PVA), e.g. having a GPC average molecular weight in the range of 2,000 to 90,000 such as the range of 3,000 to 80,000 including the range of 30,000 to 50,000, where the higher molecular weight polyvinyl acetates are typically used in bubble gum base, polyisoprene, polyethylene, vinyl acetate-vinyl laurate copolymer e.g. having a vinyl laurate content of about 5 to 50% by weight such as 10 to 45% by weight of the copolymer, and combinations hereof.

It is common in the industry to combine in a gum base a synthetic elastomer having a high molecular weight and a synthetic elastomer having a low molecular weight. Examples of such combinations of are polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof..

Examples of natural resins, which should preferably not be applied in the chewing gum according to the present invention are: Natural rosin esters, often referred to as ester gums including as examples glycerol esters of partially hydrogenated rosins, glycerol esters of polymerised rosins, glycerol esters of partially dimerized rosins, glycerol esters of tally oil rosins, pentaerythritol esters of partially hydrogenated rosins, methyl esters of rosins, partially hydrogenated methyl esters of rosins, pentaerythritol esters of rosins, synthetic resins such as terpene resins derived from alpha-pinene, beta-pinene, and/or d-limonene, and natural terpene resins.

The chewing gum according to the invention may be provided with an outer coating. The applicable hard coating may be selected from the group comprising of sugar coating and a sugarless coating and a combination thereof. The hard coating may e.g. comprise 50 to 100% by weight of a polyol selected from the group consisting of sorbitol, maltitol, mannitol, xylitol, erythritol, lactitol and Isomalt and variations thereof. In an embodiment of the invention, the outer coating is an edible film comprising at least one component selected from the group consisting of an edible film-forming agent and a wax. The film-forming agent may e.g. be selected from the group comprising cellulose derivative, a modified starch, a dextrin, gelatine, shellac, gum arabic, zein, a vegetable gum, a synthetic polymer and any combination thereof. In an embodiment of the invention, the outer coating comprises at least one additive component selected from the group comprising of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid and an agent capable of accelerating the after-chewing degradation of the degradable polymer.

Generally, the ingredients may be mixed by first melting the gum base and adding it to the running mixer. Colors, active agents and/or emulsifiers may also be added at this time. A softener such as glycerin may also be added at this time, along with syrup and a portion of the bulking agent/sweetener. Further portions of the bulking agent/sweetener may then be added to the mixer. A flavoring agent is typically added with the final portion of the bulking agent/sweetener. A high-intensity sweetener is preferably added after the final portion of bulking agent and flavor has been added.

The entire mixing procedure typically takes from five to fifteen minutes, but longer mixing times may sometimes be required. Those skilled in the art will recognize that many variations of the above described procedure may be followed. Including the one-step method described in US patent application 2004/0115305 hereby incorporated as reference. Chewing gums are formed by extrusion, compression, rolling and may be centre filled with liquids and/or solids in any form.

The chewing gum according to the present invention may also be provided with an outer coating, which may be a hard coating, a soft coating, a film coating, or a coating of any type that is known in the art, or a combination of such coatings. The coating may typically constitute 0.1 to 75 percent by weight of a coated chewing gum piece.

One preferred outer coating type is a hard coating, which term is including sugar coatings and sugar-free (or sugarless) coatings and combinations thereof. The object of hard coating is to obtain a sweet, crunchy layer, which is appreciated by the consumer and to protect the gum centers. In a typical process of providing the chewing gum centers with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colors, etc.

In one presently preferred embodiment, the coating agent applied in a hard coating process is a sugarless coating agent, e.g. a polyol including as examples sorbitol, maltitol, mannitol, xylitol, erythritol, lactitol and isomalt or e.g. a mono- di-saccharide including as example trehalose.

Or alternatively a sugar free soft coating e.g. comprising alternately applying to the centres a syrup of a polyol or a mono- di-saccharide, including as examples sorbitol, maltitol, mannitol, xylitol, erythritol, lactitol, isomalt and trehalose.

In further useful embodiments a film coating is provided by film-forming agents such as a cellulose derivative, a modified starch, a dextrin, gelatine, zein, shellec, gum arabic, a vegetable gum, a synthetic polymer, etc. or a combination thereof.

In an embodiment of the invention, the outer coating comprises at least one additive component selected from the group comprising of a binding agent, a moisture-absorbing component, a film-forming agent, a dispersing agent, an antisticking component, a bulking agent, a flavoring agent, a coloring agent, a pharmaceutically or cosmetically active component, a lipid component, a wax component, a sugar, an acid

A coated chewing gum center according to the invention may have any form, shape or dimension that permits the chewing gum center to be coated using any conventional coating process.

The glass transition temperature ($T_g$) may be determined by for example DSC (DSC: differential scanning calorimetry). The DSC may generally be applied for determining and studying of the thermal transitions of a polymer and specifically, the technique may be applied for the determination of a second order transition of a material, i.e. a thermal transition that involves a change in heat capacity, but does not have a latent heat. The glass transition is a second-order transition.

Unless otherwise indicated, as used herein with regard to polymers, the term "molecular weight" means number average molecular weight (Mn) in g/mol. Furthermore, as used herein the short form PD designates the polydispersity of polymers, polydispersity being defined as Mw /Mn, where Mw is the weight average molecular weight of a polymer. A well-established technique for characterization of biodegradable polymers is gel permeation chromatography (GPC).

The hydrophobicity and hydrofilicity of substances are expressions defining whether the substance is repelled or attracted by water. A hydrophobic molecule tends to be electrically neutral and non-polar, whereas a hydrophilic molecule tends to be a polar molecule and hence is attracted by the electric displacements found in the H-bindings of a water molecule.

Hydrophobicity is normally used on a relative scale, i.e. that one substance is more hydrophobic or hydrophilic than another substance. A theoretical expression to be used for measuring and comparing the hydrophobicity of a substance X directly is given by:

$$\text{Log P} = \text{Log K}_{(o/w)} = \text{Log ([X]}_{octanol}/[X]_{water})$$

whereby Log P can be found by measuring the solubility in water and octanol respectively for the substance.

The gum base is the masticatory substance of the chewing gum, which imparts the chew characteristics to the final product. The gum base typically defines the release profile of flavors and sweeteners and plays a significant role in the gum product.

The composition of gum base formulations can vary substantially depending on the particular product to be prepared and on the desired masticatory and other sensory characteristics of the final product. However, typical ranges (% by weight) of the above gum base components are: 5 to 80% by weight elastomeric compounds, 5 to 80% by weight elastomer plasticizers, 0 to 40% by weight of waxes, 5 to 35% by weight softener, 0 to 50% by weight filler, and 0 to 5% by weight of miscellaneous ingredients such as antioxidants, colorants, etc. The gum base may comprise about 5 to about 95 percent, by weight, of the chewing gum, more commonly, the gum base comprises 10 to about 60 percent of the gum.

Elastomers provide the rubbery, cohesive nature to the gum, which varies depending on this ingredient's chemical structure and how it may be compounded with other ingredients. Elastomers suitable for use in the gum base and gum of the present invention may include natural or synthetic types.

Elastomer plasticizers vary the firmness of the gum base. Their specificity on elastomer inter-molecular chain breaking (plasticizing) along with their varying softening points cause varying degrees of finished gum firmness and compatibility when used in base. This may be important when one wants to provide more elastomeric chain exposure to the alkanic chains of the waxes.

The elastomer compounds may be of natural origin but are preferably of synthetic origin, preferably synthetic polyesters. According to the invention, the resin compounds are preferably biodegradable polymers, and in preferred embodiments, the resin compounds are biodegradable synthetic polyesters. Natural resins of any kind are avoided in the chewing gum of the present invention.

According to an embodiment of the invention, the polymerization process to obtain the biodegradable polymer, which is applied in the chewing gum of the present invention, may be initiated by an initiator such as a polyfunctional alcohol, amine or other molecules or compounds with multiple hydroxyl or other reactive groups or mixtures thereof.

According to an embodiment of the invention, examples of suitable multifunctional initiators include but are not limited to glycerol, trimethylolpropane, pentaerythritol, dipentaerythritol, and ethoxylated or propoxylated polyamines.

Furthermore, in a preferred embodiment of the invention, the initiator may be di-functional, and examples of applicable di-functional initiators include di-functional alcohols, and non-limiting examples include 1,2-propane diol, 1,3-butane diol, other alkane diols, ethylene glycol, generally alcohols having two hydroxyl groups, and other di-functional compounds capable of initiating a ring-opening polymerization.

According to an embodiment of the invention, the fraction of initiators in the biodegradable polymer being difunctional or higher functional may be regulated, whereby the degree of linearity and branching may be controlled.

In an embodiment of the invention, the difunctional initiators comprise at least 50 mol % of the total content of initiator molecules applied. Hereby, a considerable linearity may be introduced in the biodegradable polymer according to the present invention, and a certain desired crystallinity may be obtained. Hereby, the biodegradable polyester polymer may gain very suitable properties as elastomer plasticizer, and hence an advantageous biodegradable resin may be provided in the chewing gum of the present invention. To increase the linearity to improve the crystallinity, plasticizing properties and robustness of the chewing gum in an embodiment of the invention, the content of difunctional initiators may be raised to e.g. 60%, 70%, 80%, 90%, or about 100% of the total content of moles initiator molecules applied.

Accordingly, a substantially linear polyester polymer may according to an embodiment of the invention comprise above e.g. 50 or 80 percent linear polymer chains. Generally, the biodegradable polymers used in the chewing gum of the present invention may be homopolymers, copolymers or terpolymers, including graft- and block-polymers.

Useful polymers, which may be applied as elastomers in the chewing gum of the present invention, may generally be prepared by step-growth polymerization of di-, tri- or higher-functional alcohols or esters thereof with di-, tri- or higher-functional aliphatic or aromatic carboxylic acids or esters thereof. Likewise, also hydroxy acids or anhydrides and halides of polyfunctional carboxylic acids may be used as monomers. The polymerization may involve direct polyesterification or transesterification and may be catalyzed.

The usually preferred polyfunctional alcohols contain 2 to 100 carbon atoms as for instance polyglycols and polyglycerols.

In the polymerization of an elastomer for use in the chewing gum of the present invention, some applicable examples of alcohols, which may be employed as such or as derivatives thereof, include polyols such as ethylene glycol, 1,2-propanediol, 1,3-propanediol, 1,3-butanediol, 1,4-butanediol, 1,6-hexanediol, diethylene glycol, 1,4-cyclohexanediol, 1,4-cyclohexanedimethanol, neopentyl glycol, glycerol, trimethylolpropane, pentaerythritol, sorbitol, mannitol, etc.

Generally, the elastomer polymers used in the chewing gum of the present invention may be homopolymers, copolymers or terpolymers, including graft- and block-polymers.

Further suitable examples of additional environmentally or biologically degradable chewing gum base polymers, which may be applied in accordance with the gum base of the present invention, include degradable polyesters, polycarbonates, polyester amides, polypeptides, homopolymers of amino acids such as polylysine, and proteins including derivatives hereof such as e.g. protein hydrolysates including a zein hydrolysate.

The following non-limiting examples illustrate the manufacturing of chewing gums comprising enzyme in different formulations including the evaluation of these.

**Example 1**

**Preparation of polyester elastomer obtained by step-growth polymerization**

An elastomer sample is produced using a 500 mL resin kettle equipped with an overhead stirrer, nitrogen gas inlet tube, thermometer, and distillation head for removal of methanol. To the kettle are charged 83.50 g (0.43 mole) dimethyl terephthalate, 99.29 g (0.57 mole) dimethyl adipate, 106.60 g (1.005 mole) di(ethylene glycol) and 0.6 g calcium acetate monohydrate. Under nitrogen, the mixture is slowly heated with stirring until all components become molten (120-140°C). Heating and stirring are continued and methanol is continuously distilled. The temperature slowly rises in the range 150-200°C until the evolution of methanol ceases. Heating is discontinued and the content is allowed to cool to about 100°C. The reactor lid is removed and the molten polymer is carefully poured into a receiving vessel.

Characterization of the product indicates Mn = 40,000g/mol, Mw = 190,000g/mol and Tg = -30°C.

**Example 2**

**Preparation of polyester resin obtained by ring-opening polymerization**

A resin sample is produced using a cylindrical glass, jacketed 10 L pilot reactor equipped with glass stir shaft and Teflon stir blades and bottom outlet. Heating of the reactor contents is accomplished by circulation of silicone oil, thermo stated to 130°C, through the outer jacket. ε-caprolactone (358.87 g, 3.145 mol) and 1,2-propylene glycol (79.87 g, 1.050 mol) are charged to the reactor together with stannous octoate (1.79 g, $4.42 \times 10^{-3}$ mol) as the catalyst and reacting in about 30 min. at 130°C. Then molten D,L-lactide (4.877 kg, 33.84 mol) are added and reaction continued for about 2 hours. At the end of this period, the bottom outlet is opened, and molten polymer is allowed to drain into a Teflon-lined paint can. Characterization of the product indicates $M_n$ = 6,000 g/mol, $M_w$ = 7,000 g/mol and Tg = 25-30°C.

### Example 3

### Preparation of polyester resin obtained by ring-opening polymerization

A polymerization similar to example 2 is performed to prepare a resin sample with a molar ratio of 50% D,L-lactide and 50% glycolide.

Characterization of the product indicates Mn = 6,000g/mol, Mw = 7,000g/mol and Tg = 36°C.

### Example 4

### Preparation of gum bases

The process of preparing gum bases is carried out in the following way: The gum base components are added to a mixing kettle provided with mixing means like e.g. horizontally placed Z-shaped arms. The kettle has been preheated for 15 minutes to a temperature of about 120-140°C. The mixture is mixed for 30-120 minutes until the whole mixture becomes homogeneous. The mixture is then discharged into the pan and allowed to cool to room temperature from the discharged temperature of 80-100°C.

table 1: gum base preparation

| Ingredients | Amount (%) |
|---|---|
| Elastomer of example 1 | 15 |
| Resin of example 3 | 40 |
| Emulsifier: | 5 |
| Fat: | 20 |
| Filler: | 20 |

### Example 5

### Preparation of enzyme formulations

The object of this example is to compare dispersions made from:

a hydrophobic enzyme formulation - by using sunflower oil and
a hydrophilic enzyme formulation - by using water

The two enzyme dispersions are to be compared with the enzyme as obtained from the supplier.

Three different enzymes are used: Neutrase (liquid), Bromelain (powder) and Trypsin (powder). These are mixed to give different enzyme formulations as can be seen from table 2.

| Formulation No. Ingredients | 10 | 11 | 12 | 13 | 14 | 15 | 16 | 17 |
|---|---|---|---|---|---|---|---|---|
| Neutrase | 5 | | | 5 | | | | |
| Bromelain | | 5 | | | 5 | 5 | | |
| Trypsin | | | 5 | | | | 5 | 5 |
| Water | | | | | 5 | | 5 | |
| Sunflower oil | | | | 5 | | 5 | | 5 |
| Total | 5 | 5 | 5 | 10 | 10 | 10 | 10 | 10 |

table 2: enzyme formulations, given in % of the total chewing gum, see table 3.

The mixing is carried out by means of an Ultra Turax high speed mixer mixing at room temperature (21°C) for about 2 minutes.

**Example 6**

**Preparation of encapsulated enzyme**

Encapsulation of the enzyme is made by means of an extrusion process where the enzyme is only shortly exposed to an elevated temperature due to the short material residence time in the extruder. The extruder used is a Leistritz corotational twin screw mixing extruder (Leistritz ZSE 27HP-40D), which is equipped with gravitational (loss-in-weight) feeders. In this experiment the extruder is operated with a screw speed of 80-120 rpm.

Hydrogenated vegetable oil with a melting point of 52°C is added to the extruder inlet and passed through a melting zone (barrel temperature of 75°C). Then, following a cooling zone (barrel temperature of 55°C) Trypsin is added to form a 30% mixture with the oil. After the Trypsin feeding point, a mixing zone follows (barrel temperature of 55°C) before a cooling zone (barrel temperature of 10°C). The product is discharged as a number of thin robes which are further cooled by air and cut with a rotational knife.

The resulting product is enzyme partly encapsulated in fat.

Alternatively, the encapsulated enzyme may be obtained by means of a standard fluidized bed encapsulation technique.

The resulting product is then used in chewing gum no. 101, formulation of which is seen in example 7.

**Example 7**

**Preparation of chewing gum**

The gum bases of example 4 are used in the preparation of different chewing gums with the basic formulations shown in table 3. The formulations are identical with the exception that adding of enzyme substitutes sorbitol in equivalent amounts.

Enzyme formulations 10-12 as defined in example 5 are used with chewing gum no. 101 and enzyme formulations 13-17 as defined in example 5 are used with chewing gum no. 102. Finally chewing gum no. 100 is used as reference without any enzyme formulation. This gives a total of 9 different chewing gums.

The chewing gum products are prepared as follows:

The gum base is added to a mixing kettle provided with mixing means like e.g. horizontally placed Z-shaped arms. The kettle has been preheated for 15 minutes to a temperature of about 40-60°C or the chewing gum is made in one step, immediately after preparation of gum base in the same mixer where the gum base and kettle has a temperature of less than 60°C.

One half portion of the sorbitol is added together with the gum base and mixed for 3 minutes. Softeners are slowly added and mixed for 5 minutes. Then the remaining half portion of sorbitol is added and mixed for 3 minute.

Peppermint and menthol are then added to the kettle and mixed for 1 minute. Then aspartame and acesulfame are added to the kettle and mixed for 2 minutes. Xylitol is added and mixed for 3 minutes. Finally enzyme is added and mixing continues for 1-1½ minutes. After addition of enzyme, care should be taken not to exceed the temperature, which is tolerated by the applied type of enzyme. The resulting gum mixture is then discharged and e.g. transferred to a pan at a temperature of 40-48°C. The gum is then rolled and cut into cores, sticks, balls, cubes, or any other desired shape, optionally followed by coating and polishing processes prior to packaging or use. Evidently, within the scope of the invention, other processes and ingredients may be applied in the process of manufacturing the chewing gum, for instance the one-step method may be a lenient alternative.

| Chew. Gum No. Ingredients | 100 | 101 | 102 |
|---|---|---|---|
| Enzyme formulation | 0.0 | 5.0 | 10.0 |
| Sorbitol | 48.6 | 43.6 | 38.6 |
| Gum base | 40.0 | 40.0 | 40.0 |
| Maltitol syrup | 3.0 | 3.0 | 3.0 |
| Peppermint flavor | 1.5 | 1.5 | 1.5 |
| Menthol crystals | 0.5 | 0.5 | 0.5 |
| Aspartame | 0.2 | 0.2 | 0.2 |
| Acesulfame K | 0.2 | 0.2 | 0.2 |
| Xylitol | 6.0 | 6.0 | 6.0 |

Table 3: Chewing gum formulations with different enzyme concentrations. All made with peppermint flavor. Ingredient concentrations are given in percent by weight.

**Continuous mixing of Chewing Gum:**

Alternatively an extruder apparatus, e.g. a Leistritz co-rotational twin screw mixing extruder, could be used for the continuous mixing of chewing gum.

The extruder is divided into 10 barrels/heating zones and the screw design is optimized by proper combination of various screw elements including conveying elements, reverse conveying elements, kneading discs and blocks, and mixing elements. For a further detailed description see e.g. US 6,630,182 column 4. The mixing speed is 80-120 rpm and gravitational (loss in weight) feeders are used.

The 10 barrels have individual purposes as listed below:

Barrel 1. Adding gum base and half the sorbitol, T = 25°C
Barrel 2+3. Mixing and kneading, T = 40°C
Barrel 4. Adding rest of sorbitol using a side feeder, T = 40°C
Barrel 5. Mixing, T = 40°C
Barrel 6. Adding maltitol syrup and flavor, T = 40°C
Barrel 7. Adding xylitol, aspartame, acesulfame in addition to menthol using a side feeder, T = 40°C
Barrel 8. Adding enzyme, T = 40°C
Barrel 9+10. Mixing, T = 40°C

Following the mixing process the chewing gum product is discharged to be rolled, scored, etc.

### Example 8

### Preparation of chewing gum from encapsulated enzyme

The encapsulated enzyme formulation of example 6 is used in the chewing gum formulation no. 101 of example 7 and the chewing gum is made by means of an extruder according to the process outlined in example 7. Alternatively, this preparation may also be made by using the mixing kettle also as described in example 7.

### Example 9

### Chewing gum treatment

All the manufactured chewing gums of example 7 were put into a mastication device (CF Jansson) and 6 of each were left for degradation in air at a temperature of 40°C and the remaining 2 of each were put into test tubes containing water.
The chewing gums were separately exposed to the following steps:

1. Placed in a mastication device containing 20 ml phosphate buffer solution (ammonium-di-hydrogen-phosphate 0,012 M adjusted to pH 7.4 with a 2 M NaOH solution).
2. Chewed for 8 minutes with a chewing frequency of 60 chews/min.
3. Removed from solution and formed into a spherical ball.
4. Placed in the center of a Petri dish - or placed in a closed glass containing 5 ml (0,012 M) phosphate buffer solution adjusted to pH 5.6.
5. The Petri dish placed at 40°C - or the glass containing buffer solution placed at 40°C.
6. Evaluated for degradation.

### Example 10

### Evaluation

An evaluation of the chewing gums of example 7 was carried out immediately after manufacture of the gum pieces and then after 9 and 16 days.
The initial evaluation of the chewing gum pieces was that hydrophobic formulation was possible and may be combined with conventional or slightly modified processes.
A visual evaluation after 9 and 16 days revealed no clear difference in degradation of the gum base polymers of the chewing.
In order to supplement the visual evaluation a GPC analysis was carried out on the Trypsin based enzyme formulations as this particular enzyme is known to have an advantageous effect on degradation, even when applying trypsin per se.

### Example 11

### GPC analysis

GPC (gel permeation chromatography) measurements were carried out on samples taken after 0, 9 and 16 days to estimate the degradation of the chewing gums of example 7. In GPC the average Mw of the compound in question is measured, which is seen in fig. 1a.
The abbreviations stand for:

TP: Trypsin in powder form,
TW: Trypsin mixed with water
TO: Trypsin dispersed in sunflower oil
STD: Standard

The average Mw is decreasing over time for all four graphs, hence in order to be able to see the changes more clearly fig. 1b is added showing the same data as in fig. 1a., wherein all data are indexed according to the evolution from the initial value. The abbreviations are also the same.
Initially, it is noted that a certain degradation is obtained even when no enzyme is added to the chewing gum (STD).

Moreover, it is realized that degradation over time is improved when adding trypsin to the chewing gum in a hydrophobic formulation (TO), i.e. when suspending trypsin in oil prior to adding of the formulation to the chewing gum.

Furthermore, and most important, it is noted that enzymes may be added hydrophobically formulated to chewing gum and thereby obtaining a minimized or delayed release of enzymes from the chewing gum without necessarily denaturing and compromising the effect of the enzyme.

**Claims**

1. A chewing gum comprising at least one biodegradable polymer,
   sweetener in an amount from 0.5% to 95% of said chewing gum,
   one or more flavoring agents, fillers in an amount from 0 to 50% by weight of said chewing gum, further chewing gum ingredients and at least one enzyme, wherein said at least one enzyme is comprised in a hydrophobic enzyme formulation, wherein said hydrophobic enzyme formulation comprises at least one enzyme

   - at least partly encapsulated by a hydrophobic encapsulation, or
   - dispersed in an anhydrous dispersion medium, wherein said anhydrous medium comprises oil or other suitable lipophilic solvents,

   wherein said at least one enzyme is release controlled by a hydrophobic enzyme formulation.

2. A chewing gum according to claim 1, wherein said hydrophobic enzyme formulation comprises at least one enzyme adsorbed to a hydrophobic carrier.

3. A chewing gum according to claim 1 or 2, wherein said hydrophobic enzyme formulation comprises at least one hydrophilic enzyme.

4. A chewing gum according to any of the claims 1-3, wherein said hydrophobic enzyme formulation comprises at least one modified enzyme, wherein modified means chemically modified, genetically modified, phosphorylated, a zymogen, or a proenzyme.

5. A chewing gum according to any of the claims 1-4, wherein said release control is provided by encapsulating said enzyme within a hydrophobic material.

6. A chewing gum according to any of the claims 1-5, wherein said release control is provided by encapsulating said enzyme within a hydrophobic polymer.

7. A chewing gum according to any of the claims 1-6, wherein said release control is provided by encapsulating said enzyme within a wax and/or a fat.

8. A chewing gum according to any of the claims 1-7, wherein said release control is provided by keeping said enzyme within a hydrophobic dispersion.

9. A chewing gum according to any of the claims 1-8, wherein said hydrophobic dispersion is an oil dispersion.

10. A chewing gum according to any of the claims 1-9, wherein said release control is provided by adding to said enzyme a part making it hydrophobic.

11. A chewing gum according to any of the claims 1-10, wherein said hydrophobic enzyme formulation is obtained by employing a predominantly hydrophobic enzyme.

12. A chewing gum according to any of the claims 1-11, wherein said at least one enzyme is activated when, during chewing, contact is made between said enzyme, said at least one biodegradable polymer and water or when, during chewing, contact is made between said enzyme, said at least one biodegradable polymer, water and at least one second enzyme present in the oral cavity.

13. A chewing gum according to any of the claims 1-12, wherein the water content of said chewing gum is below 5 %

26

by weight, preferably below 2 % by weight of said chewing gum.

14. A chewing gum according to any of the claims 1-13, wherein said at least one biodegradable polymer comprises synthetic biodegradable polymers and/or natural biodegradable polymers.

15. A chewing gum according to any of the claims 1-14, wherein said at least one biodegradable polymer comprises a polyester.

16. A chewing gum according to any of the claims 1-15, wherein at least one of said synthetic biodegradable polymers is selected from the group consisting of cellulose derivatives such as cellulose ether, cellulose ester or cellulose co-esters, aliphatic polyesters such as poly lactic acid, polyhydroxybutyric acid, hydrophobic proteins such as zein and any combination thereof.

17. A chewing gum according to any of the claims 1-16, wherein at least one of said biodegradable polymers is selected from the group consisting of polypeptides such as collagen and gelatin; polyamino acids such as poly-L-glutamic acid and poly-L-lysine; polysaccharides such as alginic acid, chitin or any combination thereof.

18. A chewing gum according to any of the claims 1-17, wherein said at least one enzyme is immobilized by an enzyme carrier

19. A chewing gum according to any of the claims 1-18, wherein the amount of said enzyme carrier in the chewing gum subsequent to chewing in five minutes is above 10 % of the initial amount of said enzyme carrier.

20. A chewing gum according to any of the claims 1-19, wherein the amount of said at least one enzyme in the chewing gum subsequent to chewing in five minutes is above 10 % of the initial amount of said at least one enzyme.

21. A chewing gum according to any of the claims 1-20, wherein the chewing of said chewing gum facilitates said at least one enzyme to initiate the degradation of said at least one biodegradable polymer.

22. A chewing gum according to any of the claims 1-21, wherein said at least one enzyme has a temperature optimum in an interval between 0°C and 80°C, preferably between 15°C and 55°C.

23. A chewing gum according to any of the claims 1-22, wherein said at least one enzyme has a temperature optimum in an interval between 30°C and 37°C, preferably 32°C and 35°C.

24. A chewing gum according to any of the claims 1-23, wherein the temperature range between 32°C and 35°C is within the range of optimal activity of the enzyme.

25. A chewing gum according to any of the claims 1-24, wherein at least two enzymes having different temperature optimums are applied at the same time.

26. A chewing gum according to any of the claims 1-25, wherein said at least one enzyme is selected from the group consisting of oxidoreductases, transferases, hydrolases, lyases, isomerases and ligases.

27. A chewing gum according to any of the claims 1-26, wherein said chewing gum comprises a buffering system.

28. A chewing gum according to any of the claims 1-27, wherein said buffering system provides a pH-value above 5.5.

29. A chewing gum according to any of the claims 1-28, wherein said chewing gum is centerfilled.

30. A chewing gum according to any of the claims 1-29, wherein said chewing gum is formed by compression.

31. A chewing gum according to any of the claims 1-30, wherein said fillers comprises hydrophilic fillers.

32. A chewing gum according to any of the claims 1-31, wherein said hydrophilic fillers are selected from the group consisting of ground limestone, calcium carbonate, magnesium silicate, starch, aluminum silicate, talc, mono-, di- and tri-calcium phosphate, cellulose polymers and combinations thereof.

33. A chewing gum according to any of the claims 1-32, wherein said chewing gum comprises filler in an amount of 1 to 50% by weight of the chewing gum, more typically 10 to 40% by weight of the chewing gum.

34. A chewing gum according to any of the claims 1-33, wherein said chewing gum comprises active ingredients.

35. A chewing gum according to any of the claims 1-34, wherein said sweetener comprises bulk sweeteners and/or high-intensity sweeteners.

36. A chewing gum according to any of the claims 1-35, wherein said chewing gum comprises a coating.

37. A chewing gum according to any of the claims 1-36, wherein said chewing gum comprises softeners selected from the group consisting of glycerol monostearate, glycerol triacetate, lecithin, mono-, and diglycerides, short and medium chain triglycerides, acetylated monoglycerides, and combinations thereof.

38. A chewing gum according to any of the claims 1-37, wherein at least one of said at least one biodegradable polymer comprises at least one biodegradable elastomer and/or at least one of said at least one biodegradable polymer comprises at least one biodegradable elastomer plasticizer.

39. A chewing gum according to any of the claims 1-38, wherein at least one of said at least one biodegradable polymer comprises at least one synthetic polymer.

40. A chewing gum according to any of the claims 1-39, wherein at least one of said at least one biodegradable polymer comprises at least one polyester polymer obtained by polymerization of at least one cyclic ester.

41. A chewing gum according to any of the claims 1-40, wherein at least one of said at least one biodegradable polymer comprises at least one polyester polymer obtained by polymerization of at least one alcohol or derivative thereof and at least one acid or derivative thereof.

42. A chewing gum according to any of the claims 1-41, wherein at least one of said at least one biodegradable polymer comprises at least one polyester obtained by polymerization of at least one compound selected from the group of cyclic esters, alcohols or derivatives thereof and carboxylic acids or derivatives thereof.

43. A chewing gum according to any of the claims 1-42, wherein said at least one biodegradable polyester is produced by condensation and/or by ring-opening.

44. A chewing gum according to any of the claims 1-43, wherein said hydrophobic enzyme formulation is at least partly comprised in the chewing gum and/or in a coating provided to the chewing gum.

45. Method of release controlling at least one enzyme in a chewing gum according to any of the claims 1-44 comprising at least one biodegradable polymer, whereby the control of release during chewing is obtained through adding of hydrophobic enzyme formulation to the chewing gum.

46. Use of a hydrophobic enzyme formulation for the purpose of delaying or minimizing release of enzyme from a chewing gum according to any of the claims 1-44 during chewing.


**Patentansprüche**

1. Kaugummi, umfassend mindestens ein biologisch abbaubares Polymer, Süßungsmittel in einer Menge von 0,5% bis 95% des Kaugummis, einen oder mehrere Aroma- oder Geschmackstoffe, Füllstoffe in einer Menge von 0 bis 50 Gew.-% des Kaugummis, weitere Kaugummibestandteile und mindestens ein Enzym, wobei das mindestens eine Enzym in einer hydrophoben Enzymformulierung enthalten ist, wobei die hydrophobe Enzymformulierung mindestens ein Enzym umfasst,

   - das zumindest teilweise durch eine hydrophobe Verkapselung eingekapselt ist oder
   - das in einem wasserfreien Dispersionsmedium dispergiert ist, wobei das wasserfreie Medium Öl oder andere geeignete lipophile Lösungsmittel umfasst,

wobei das mindestens eine Enzym durch eine hydrophobe Enzymformulierung gesteuert freigesetzt wird.

2. Kaugummi nach Anspruch 1, wobei die hydrophobe Enzymformulierung mindestens ein Enzym, das an einen hydrophoben Träger adsorbiert ist, umfasst.

3. Kaugummi nach Anspruch 1 oder 2, wobei die hydrophobe Enzymformulierung mindestens ein hydrophiles Enzym umfasst.

4. Kaugummi nach einem der Ansprüche 1-3, wobei die hydrophobe Enzymformulierung mindestens ein modifiziertes Enzym, wobei modifiziert chemisch modifiziert, genetisch modifiziert, phosphoryliert bedeutet, ein Zymogen oder ein Proenzym umfasst.

5. Kaugummi nach einem der Ansprüche 1-4, wobei die Freisetzungssteuerung bereitgestellt wird, indem das Enzym in einem hydrophoben Material verkapselt wird.

6. Kaugummi nach einem der Ansprüche 1-5, wobei die Freisetzungssteuerung bereitgestellt wird, indem das Enzym in einem hydrophoben Polymer verkapselt wird.

7. Kaugummi nach einem der Ansprüche 1-6, wobei die Freisetzungssteuerung bereitgestellt wird, indem das Enzym in einem Wachs und/oder einem Fett verkapselt wird.

8. Kaugummi nach einem der Ansprüche 1-7, wobei die Freisetzungssteuerung bereitgestellt wird, indem das Enzym in einer hydrophoben Dispersion gehalten wird.

9. Kaugummi nach einem der Ansprüche 1-8, wobei die hydrophobe Dispersion eine Öldispersion ist.

10. Kaugummi nach einem der Ansprüche 1-9, wobei die Freisetzungssteuerung bereitgestellt wird, indem zu dem Enzym ein Anteil, welcher dieses hydrophob macht, hinzugefügt wird.

11. Kaugummi nach einem der Ansprüche 1-10, wobei die hydrophobe Enzymformulierung erhalten wird, indem ein überwiegend hydrophobes Enzym eingesetzt wird.

12. Kaugummi nach einem der Ansprüche 1-11, wobei das mindestens eine Enzym aktiviert wird, wenn während des Kauens ein Kontakt zwischen dem Enzym, dem mindestens einen biologisch abbaubaren Polymer und Wasser hergestellt wird oder wenn während des Kauens ein Kontakt zwischen dem Enzym, dem mindestens einen biologisch abbaubaren Polymer, Wasser und mindestens einem zweiten Enzym, das in der Mundhöhle vorhanden ist, hergestellt wird.

13. Kaugummi nach einem der Ansprüche 1-12, wobei der Wassergehalt des Kaugummis unter 5 Gew.-%, vorzugsweise unter 2 Ges.-% des Kaugummis liegt.

14. Kaugummi nach einem der Ansprüche 1-13, wobei das mindestens eine biologisch abbaubare Polymer synthetische biologisch abbaubare Polymere und/oder natürliche biologisch abbaubare Polymere umfasst.

15. Kaugummi nach einem der Ansprüche 1-14, wobei das mindestens eine biologisch abbaubare Polymer einen Polyester umfasst.

16. Kaugummi nach einem der Ansprüche 1-15, wobei mindestens eines von den synthetischen biologisch abbaubaren Polymeren aus der Gruppe bestehend aus Cellulosederivaten, wie Celluloseether, Celluloseester oder Cellulose-Coestern, aliphatischen Polyestern, wie Polymilchsäure, Polyhydroxybuttersäure, hydrophoben Proteinen, wie Zein und einer jeglichen Kombination von diesen ausgewählt ist.

17. Kaugummi nach einem der Ansprüche 1-16, wobei mindestens eines von den biologisch abbaubaren Polymeren aus der Gruppe bestehend aus Polypeptiden, wie Collagen und Gelatine; Polyaminosäuren, wie Poly-L-glutaminsäure und Poly-L-lysin; Polysacchariden, wie Alginsäure, Chitin oder einer jeglichen Kombination davon ausgewählt ist.

18. Kaugummi nach einem der Ansprüche 1-17, wobei das mindestens eine Enzym durch einen Enzymträger immobilisiert ist.

**19.** Kaugummi nach einem der Ansprüche 1-18, wobei die Menge des Enzymträgers in dem Kaugummi nach einem Kauen für fünf Minuten oberhalb von 10% der anfänglichen Menge des Enzymträgers liegt.

**20.** Kaugummi nach einem der Ansprüche 1-19, wobei die Menge des mindestens einen Enzyms in dem Kaugummi nach einem Kauen für fünf Minuten oberhalb von 10% der anfänglichen Menge des mindestens einen Enzyms liegt.

**21.** Kaugummi nach einem der Ansprüche 1-20, wobei das Kauen des Kaugummis es dem mindestens einen Enzym erleichtert, den Abbau des mindestens einen biologisch abbaubaren Polymers zu initiieren.

**22.** Kaugummi nach einem der Ansprüche 1-21, wobei das mindestens eine Enzym ein Temperaturoptimum in einem Intervall zwischen 0°C und 80°C, vorzugsweise zwischen 15°C und 55°C aufweist.

**23.** Kaugummi nach einem der Ansprüche 1-22, wobei das mindestens eine Enzym ein Temperaturoptimum in einem Intervall zwischen 30°C und 37°C, vorzugsweise 32°C und 35°C aufweist.

**24.** Kaugummi nach einem der Ansprüche 1-23, wobei der Temperaturbereich zwischen 32°C und 35°C innerhalb des Bereichs der optimalen Aktivität des Enzyms liegt.

**25.** Kaugummi nach einem der Ansprüche 1-24, wobei mindestens zwei Enzyme mit unterschiedlichen Temperaturoptima gleichzeitig angewendet werden.

**26.** Kaugummi nach einem der Ansprüche 1-25, wobei das mindestens eine Enzym aus der Gruppe bestehend aus Oxidoreduktasen, Transferasen, Hydrolasen, Lyasen, Isomerasen und Ligasen ausgewählt ist.

**27.** Kaugummi nach einem der Ansprüche 1-26, wobei der Kaugummi ein Pufferungssystem umfasst.

**28.** Kaugummi nach einem der Ansprüche 1-27, wobei das Pufferungssystem einen pH-Wert über 5,5 bereitstellt.

**29.** Kaugummi nach einem der Ansprüche 1-28, wobei der Kaugummi im Zentrum gefüllt ist.

**30.** Kaugummi nach einem der Ansprüche 1-29, wobei der Kaugummi durch Verdichten geformt wird.

**31.** Kaugummi nach einem der Ansprüche 1-30, wobei die Füllstoffe hydrophile Füllstoffe umfassen.

**32.** Kaugummi nach einem der Ansprüche 1-31, wobei die hydrophilen Füllstoffe aus der Gruppe bestehend aus gemahlenem Kalkstein, Calciumcarbonat, Magnesiumsilicat, Stärke, Aluminiumsilicat, Talkum, Mono-, Di- und Tricalciumphosphat, Cellulosepolymeren und Kombinationen davon ausgewählt sind.

**33.** Kaugummi nach einem der Ansprüche 1-32, wobei der Kaugummi Füllstoff in einer Menge von 1 bis 50 Gew.-% des Kaugummis, noch typischer 10 bis 40 Gew.-% des Kaugummis umfasst.

**34.** Kaugummi nach einem der Ansprüche 1-33, wobei der Kaugummi Wirkstoffe umfasst.

**35.** Kaugummi nach einem der Ansprüche 1-34, wobei das Süßungsmittel Füllsüßstoffe und/oder hochintensive Süßstoffe umfasst.

**36.** Kaugummi nach einem der Ansprüche 1-35, wobei der Kaugummi einen Überzug umfasst.

**37.** Kaugummi nach einem der Ansprüche 1-36, wobei der Kaugummi Weichmacher, ausgewählt aus der Gruppe bestehend aus Glycerolmonostearat, Glyceroltriacetat, Lecithin, Mono- und Diglyceriden, kurz- und mittelkettigen Triglyceriden, acetylierten Monoglyceriden und Kombinationen davon, umfasst.

**38.** Kaugummi nach einem der Ansprüche 1-37, wobei mindestens eines von dem mindestens einen biologisch abbaubaren Polymer mindestens ein biologisch abbaubares Elastomer umfasst und/oder mindestens eines von dem mindestens einen biologisch abbaubaren Polymer mindestens einen biologisch abbaubaren Elastomer-Weichmacher umfasst.

**39.** Kaugummi nach einem der Ansprüche 1-38, wobei mindestens eines von dem mindestens einen biologisch abbaubaren Polymer mindestens ein synthetisches Polymer umfasst.

**40.** Kaugummi nach einem der Ansprüche 1-39, wobei mindestens eines von dem mindestens einen biologisch abbaubaren Polymer mindestens ein Polyesterpolymer umfasst, das durch Polymerisation von mindestens einem cyclischen Ester erhalten worden ist.

**41.** Kaugummi nach einem der Ansprüche 1-40, wobei mindestens eines von dem mindestens einen biologisch abbaubaren Polymer mindestens ein Polyesterpolymer umfasst, das durch Polymerisation von mindestens einem Alkohol oder Derivat davon und mindestens einer Säure oder einem Derivat davon erhalten worden ist.

**42.** Kaugummi nach einem der Ansprüche 1-41, wobei mindestens eines von dem mindestens einen biologisch abbaubaren Polymer mindestens einen Polyester umfasst, der durch Polymerisation von mindestens einer Verbindung, ausgewählt aus der Gruppe von cyclischen Estern, Alkoholen oder Derivaten davon, und Carbonsäuren oder Derivaten davon erhalten worden ist.

**43.** Kaugummi nach einem der Ansprüche 1-42, wobei der mindestens eine biologisch abbaubare Polyester durch Kondensation und/oder durch Ringöffnung hergestellt ist.

**44.** Kaugummi nach einem der Ansprüche 1-43, wobei die hydrophobe Enzymformulierung zumindest teilweise in dem Kaugummi und/oder in einem Überzug, mit dem der Kaugummi versehen ist, enthalten ist.

**45.** Verfahren zum Steuern der Freisetzung von mindestens einem Enzym in einem Kaugummi nach einem der Ansprüche 1-44, umfassend mindestens ein biologisch abbaubares Polymer, wobei die Freisetzungssteuerung während des Kauens durch Hinzufügen von hydrophober Enzymformulierung zu dem Kaugummi erhalten wird.

**46.** Verwendung einer hydrophoben Enzymformulierung zu dem Zweck einer Verzögerung oder Minimierung der Freisetzung von Enzym aus einem Kaugummi nach einem der Ansprüche 1-44 während des Kauens.

**Revendications**

**1.** Chewing-gum comprenant au moins un polymère biodégradable,
un édulcorant en une quantité allant de 0,5 % à 95 % dudit chewing-gum,
un ou plusieurs agents aromatisants, une ou plusieurs charges en une quantité allant de 0 à 50 % en poids dudit chewing-gum, d'autres ingrédients de chewing-gum et au moins une enzyme, dans lequel ladite au moins une enzyme est comprise dans une formulation d'enzyme hydrophobe,
dans lequel ladite formulation d'enzyme hydrophobe comprend au moins une enzyme

- au moins partiellement encapsulée par une encapsulation hydrophobe, ou
- dispersée dans un milieu de dispersion anhydre, dans lequel ledit milieu anhydre comprend de l'huile ou d'autres solvants lipophiles appropriés,

dans lequel la libération de ladite au moins une enzyme est contrôlée par une formulation d'enzyme hydrophobe.

**2.** Chewing-gum selon la revendication 1, dans lequel ladite formulation d'enzyme hydrophobe comprend au moins une enzyme adsorbée sur un support hydrophobe.

**3.** Chewing-gum selon la revendication 1 ou 2, dans lequel ladite formulation d'enzyme hydrophobe comprend au moins une enzyme hydrophile.

**4.** Chewing-gum selon l'une quelconque des revendications 1 à 3, dans lequel ladite formulation d'enzyme hydrophobe comprend au moins une enzyme modifiée, le terme « modifié » signifiant chimiquement modifié, génétiquement modifié, phosphorylé, un zymogène, ou un proenzyme.

**5.** Chewing-gum selon l'une quelconque des revendications 1 à 4, dans lequel ledit contrôle de la libération s'effectue en encapsulant ladite enzyme dans un matériau hydrophobe.

**6.** Chewing-gum selon l'une quelconque des revendications 1 à 5, dans lequel ledit contrôle de la libération s'effectue en encapsulant ladite enzyme dans un polymère hydrophobe.

**7.** Chewing-gum selon l'une quelconque des revendications 1 à 6, dans lequel ledit contrôle de la libération s'effectue en encapsulant ladite enzyme dans une cire et/ou une matière grasse.

**8.** Chewing-gum selon l'une quelconque des revendications 1 à 7, dans lequel ledit contrôle de la libération s'effectue en maintenant ladite enzyme dans une dispersion hydrophobe.

**9.** Chewing-gum selon l'une quelconque des revendications 1 à 8, dans lequel ladite dispersion hydrophobe est une dispersion d'huile.

**10.** Chewing-gum selon l'une quelconque des revendications 1 à 9, dans lequel ledit contrôle de la libération s'effectue en ajoutant à ladite enzyme un élément la rendant hydrophobe.

**11.** Chewing-gum selon l'une quelconque des revendications 1 à 10, dans lequel ladite formulation d'enzyme hydrophobe est obtenue en employant une enzyme principalement hydrophobe.

**12.** Chewing-gum selon l'une quelconque des revendications 1 à 11, dans lequel ladite au moins une enzyme est activée lorsque, pendant la mastication, un contact se produit entre ladite enzyme, ledit au moins un polymère biodégradable et de l'eau ou lorsque, pendant la mastication, un contact se produit entre ladite enzyme, ledit au moins un polymère biodégradable, de l'eau et au moins une seconde enzyme présente dans la cavité buccale.

**13.** Chewing-gum selon l'une quelconque des revendications 1 à 12, dans lequel la teneur en eau dudit chewing-gum est inférieure à 5 % en poids, de préférence inférieure à 2 % en poids dudit chewing-gum.

**14.** Chewing-gum selon l'une quelconque des revendications 1 à 13, dans lequel ledit au moins un polymère biodégradable comprend des polymères biodégradables synthétiques et/ou des polymères biodégradables naturels.

**15.** Chewing-gum selon l'une quelconque des revendications 1 à 14, dans lequel ledit au moins un polymère biodégradable comprend un polyester.

**16.** Chewing-gum selon l'une quelconque des revendications 1 à 15, dans lequel au moins un desdits polymères biodégradables synthétiques est choisi dans le groupe comprenant les dérivés de cellulose tels que l'éther de cellulose, l'ester de cellulose ou les co-esters de cellulose, les polyesters aliphatiques tels que l'acide polylactique, l'acide polyhydroxybutyrique, les protéines hydrophobes telles que la zéine et une combinaison quelconque de ces éléments.

**17.** Chewing-gum selon l'une quelconque des revendications 1 à 16, dans lequel au moins un desdits polymères biodégradables est choisi dans le groupe comprenant les polypeptides tels que le collagène et la gélatine ; les poly (acides aminés) tels que l'acide poly-L-glutamique et la poly-L-lysine ; les polysaccharides tels que l'acide alginique, la chitine ou une combinaison quelconque de ces éléments.

**18.** Chewing-gum selon l'une quelconque des revendications 1 à 17, dans lequel ladite au moins une enzyme est immobilisée par un support d'enzyme.

**19.** Chewing-gum selon l'une quelconque des revendications 1 à 18, dans lequel la quantité dudit support d'enzyme dans le chewing-gum après cinq minutes de mastication est supérieure à 10 % de la quantité initiale dudit support d'enzyme.

**20.** Chewing-gum selon l'une quelconque des revendications 1 à 19, dans lequel la quantité de ladite au moins une enzyme dans le chewing-gum après cinq minutes de mastication est supérieure à 10 % de la quantité initiale de ladite au moins une enzyme.

**21.** Chewing-gum selon l'une quelconque des revendications 1 à 20, dans lequel la mastication dudit chewing-gum facilite l'initiation par ladite au moins une enzyme de la dégradation dudit au moins un polymère biodégradable.

**22.** Chewing-gum selon l'une quelconque des revendications 1 à 21, dans lequel la température optimale de ladite au moins une enzyme est située dans un intervalle compris entre 0 °C et 80 °C, de préférence entre 15 °C et 55 °C.

23. Chewing-gum selon l'une quelconque des revendications 1 à 22, dans lequel la température optimale de ladite au moins une enzyme est située dans un intervalle compris entre 30 °C et 37 °C, de préférence entre 32 °C et 35 °C.

24. Chewing-gum selon l'une quelconque des revendications 1 à 23, dans lequel la plage de température comprise entre 32 °C et 35 °C se situe dans la plage d'activité optimale de l'enzyme.

25. Chewing-gum selon l'une quelconque des revendications 1 à 24, dans lequel au moins deux enzymes ayant des températures optimales différentes sont appliquées en même temps.

26. Chewing-gum selon l'une quelconque des revendications 1 à 25, dans lequel ladite au moins une enzyme est choisie dans le groupe comprenant les oxydoréductases, les transférases, les hydrolases, les lyases, les isomérases et les ligases.

27. Chewing-gum selon l'une quelconque des revendications 1 à 26, dans lequel ledit chewing-gum comprend un système tampon.

28. Chewing-gum selon l'une quelconque des revendications 1 à 27, dans lequel ledit système tampon confère une valeur de pH supérieure à 5,5.

29. Chewing-gum selon l'une quelconque des revendications 1 à 28, dans lequel ledit chewing-gum est fourré.

30. Chewing-gum selon l'une quelconque des revendications 1 à 29, dans lequel ledit chewing-gum est formé par compression.

31. Chewing-gum selon l'une quelconque des revendications 1 à 30, dans lequel lesdits excipients comprennent des excipients hydrophiles.

32. Chewing-gum selon l'une quelconque des revendications 1 à 31, dans lequel lesdits excipients hydrophiles sont choisis dans le groupe comprenant le calcaire broyé, le carbonate de calcium, le silicate de magnésium, l'amidon, le silicate d'aluminium, le talc, le phosphate monocalcique, dicalcique et tricalcique, les polymères de cellulose et leurs combinaisons.

33. Chewing-gum selon l'une quelconque des revendications 1 à 32, dans lequel ledit chewing-gum comprend un excipient en une quantité allant de 1 à 50 % en poids du chewing-gum, plus généralement de 10 à 40 % en poids du chewing-gum.

34. Chewing-gum selon l'une quelconque des revendications 1 à 33, dans lequel ledit chewing-gum comprend des ingrédients actifs.

35. Chewing-gum selon l'une quelconque des revendications 1 à 34, dans lequel ledit édulcorant comprend des édulcorants de masse et/ou des édulcorants de haute intensité.

36. Chewing-gum selon l'une quelconque des revendications 1 à 35, dans lequel ledit chewing-gum comprend un enrobage.

37. Chewing-gum selon l'une quelconque des revendications 1 à 36, dans lequel ledit chewing-gum comprend des ramollissants choisis dans le groupe comprenant le monostéarate de glycérol, le triacétate de glycérol, la lécithine, les monoglycérides et les diglycérides, les triglycérides à chaîne courte et moyenne, les monoglycérides acétylés, et leurs combinaisons.

38. Chewing-gum selon l'une quelconque des revendications 1 à 37, dans lequel au moins un dudit au moins un polymère biodégradable comprend au moins un élastomère biodégradable et/ou au moins un dudit au moins un polymère biodégradable comprend au moins un plastifiant d'élastomère biodégradable.

39. Chewing-gum selon l'une quelconque des revendications 1 à 38, dans lequel au moins un dudit au moins un polymère biodégradable comprend au moins un polymère synthétique.

**40.** Chewing-gum selon l'une quelconque des revendications 1 à 39, dans lequel au moins un dudit au moins un polymère biodégradable comprend au moins un polymère de polyester obtenu par polymérisation d'au moins un ester cyclique.

**41.** Chewing-gum selon l'une quelconque des revendications 1 à 40, dans lequel au moins un dudit au moins un polymère biodégradable comprend au moins un polymère de polyester obtenu par polymérisation d'au moins un alcool ou d'un dérivé de celui-ci et d'au moins un acide ou d'un dérivé de celui-ci.

**42.** Chewing-gum selon l'une quelconque des revendications 1 à 41, dans lequel au moins un dudit au moins un polymère biodégradable comprend au moins un polyester obtenu par polymérisation d'au moins un composé choisi dans le groupe des esters cycliques, des alcools ou des dérivés de ceux-ci et des acides carboxyliques ou des dérivés de ceux-ci.

**43.** Chewing-gum selon l'une quelconque des revendications 1 à 42, dans lequel ledit au moins un polyester biodégradable est produit par condensation et/ou par ouverture de cycle.

**44.** Chewing-gum selon l'une quelconque des revendications 1 à 43, dans lequel ladite formulation d'enzyme hydrophobe est au moins partiellement comprise dans le chewing-gum et/ou dans un enrobage entourant le chewing-gum.

**45.** Procédé de contrôle de la libération d'au moins une enzyme dans un chewing-gum selon l'une quelconque des revendications 1 à 44 comprenant au moins un polymère biodégradable, de sorte que le contrôle de la libération pendant la mastication est obtenu par l'addition d'une formulation d'enzyme hydrophobe au chewing-gum.

**46.** Utilisation d'une formulation d'enzyme hydrophobe pour retarder ou minimiser la libération d'une enzyme présente dans un chewing-gum selon l'une quelconque des revendications 1 à 44 pendant la mastication.

Fig. 1a

Fig. 1b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5672367 A
- WO 2005063037 A
- US 4310554 A
- US 6190591 B
- US 2004121002 A
- EP 0238216 A
- US 5846927 A
- US 4849357 A
- US 5134072 A
- WO 02076229 A1
- US 6017565 A
- US 5976581 A
- US 4968511 A
- US 4405647 A

- US 4753805 A
- WO 8603967 A
- EP 513978 A
- US 5866179 A
- WO 9721424 A
- EP 0890358 A
- DE 19751330
- US 6322828 B
- DK 0300070 W
- DK 0300465 W
- WO 0025598 A
- US 20040115305 A
- US 6630182 B

**Non-patent literature cited in the description**

- Lexikon der Hilfstoffe für Pharmacie. **H.P. Fiedler.** Kosmetik und Angrenzende Gebiete. 1981, 63-64
- **Martindale.** The Extra Pharmacopoeia. 547-578

- *J. Dent.Res.,* 1949, vol. 28 (2), 160-171
- **Barney H. Hunter ; Robert L. Talbert.** *Pharm. Int.,* November 1985, 267-271